# EUROPEAN PATENT APPLICATION

(11) **EP 4 647 158 A1**
(43) Date of publication of application: **12.11.2025**
(21) Application number: 25174267.2
(22) Date of filing: 05.05.2025
(51) Int. Cl.: B01J 8/00, B01J 8/08, B01J 8/12, C01B 3/24, C01B 32/05, B01J 6/00, B01J 7/00

(54) **MOVING PACKED BED PROCESSING PLANT UTILIZING MEDIUM TEMPERATURE HEATING AND SUPERHEATING OF PROCESS MATERIALS AND GAS**

(30) Priority: 06.05.2024 US 202418655762
(71) Applicant: X-Energy, LLC, Rockville, MD 20852 (US)
(72) Inventor: SWANEPOEL, Jacobus, Rockville, 20850 (US)
(74) Representative: Zacco Denmark A/S

(57) **Abstract**

A moving packed bed processing plant using medium temperature heating and superheating of process materials to produce gas and solid products is disclosed. In one form a system includes a reactor, a medium temperature heating section and a superheating section. The reactor includes a particle preheating section, a high temperature section, and a decomposition and reaction section with a moving packed bed of particles flowing through the sections of the reactor. The medium temperature heating section heats at least one of gases or particles to a first defined temperature. The superheating section heats the at least one of gases or particles received from the medium temperature heating section to a second defined temperature with an electrical system and provides the heated at least one gases or particles to the high temperature section of the reactor.

## Description

### FIELD OF THE INVENTION

The present invention relates to hydrocarbon pyrolysis systems and in particular to moving packed bed processing plants utilizing medium temperature heating and superheating of process material to produce gas and solid products.

### BACKGROUND

Conventional hydrocarbon pyrolysis systems often operate at high temperatures such as 1,000-2,000 Celsius. In these conventional systems, it can often be difficult to recover the energy associated with operating at these high temperatures. As a result, the costs associated with providing such a high temperature within conventional hydrocarbon pyrolysis systems often do not make their use economical. Improved systems that provide for hydrocarbon pyrolysis in an economic manner are desirable.

### SUMMARY

To address the problem described above, implementations of systems in the present disclosure such as moving packed bed processing plants utilize medium temperature heating and superheating of process material to produce gas and solid products. As described in the present application, a medium temperature chamber and a superheating chamber in implementations of the described systems provide a high enough temperature for a reaction to proceed economically.

In one implementation, the present disclosure provides a system comprising a reactor, a medium temperature heating section, and a superheating section.

The reactor comprises a moving packed bed of particles flowing downward through the reactor from a top of the reactor to a bottom of the reactor; a feed gas interacting with the moving packed bed of particles and flowing upward through the reactor in an opposite direction to a direction of movement of the moving packed bed of particles; a particle preheating section configured to preheat particles of the moving packed bed of particles; a high temperature section configured to receive the particles of the moving packed bed of particles that have been preheated in the particle preheating section and to transfer energy to the received particles to raise the temperature of the received particles to at least one of a decomposition temperature or a reaction temperature; and a decomposition and reaction section configured to receive the particles of the moving packed bed of particles whose temperature has been raised to the at least one of the decomposition temperature or the reaction temperature, to receive the feed gas interacting with the moving packed bed of particles, and to provide heat transfer between the particles of the moving packed bed of particles and the feed gas such that a reaction occurs that generates a gaseous product and a solid product.

The medium temperature heating section is configured to heat at least one of gases or particles to a first defined temperature. The superheating section is configured to heat the at least one of gases or particles received from the medium temperature heating section to a second defined temperature with an electrical system and to provide the at least one of gases or particles heated to the second defined temperature to the high temperature section of the reactor, where the high temperature section of the reactor utilizes the at least one of gases or particles received from the superheating gaseous chamber to transfer energy to the received particles of the moving bed of particles to raise the temperature of the received particles of the moving bed of particles to the at least one of the decomposition temperature or the reaction temperature.

In another implementation, the present disclosure provides a method in which a medium temperature heating section heats at least one of gas or particles to a first defined temperature and an electrical system of a superheating section heats the at least one of gas or particles received from the medium temperature heating section to a second defined temperature.

A high temperature section of a reactor heats particles of a moving packed bed of particles flowing through the reactor with the at least one of gas or particles received from the superheating section to raise the temperature of the particles of the moving packed bed of particles to at least one of a decomposition temperature or a reaction temperature. A decomposition and reaction section of the reactor receives particles of the moving packed bed of particles whose temperatures has been raised to the at least one of the decomposition temperature or the reaction temperature and provides heat transfer between the particles of the moving packed bed of particles and a feed gas such that a reaction occurs that generates a gaseous product and a solid product.

### BRIEF DESCRIPTION OF THE DRAWINGS

Figure 1 is a block diagram of a system such as a moving packed bed processing plant that utilizes medium temperature heating and superheating of process materials to produce gas and solid products.
Figure 2 is a flow chart of one form of a method for operating a moving packed bed processing plant utilizing medium temperature heating and superheating of processing materials to produce gas and solid products.

### DETAILED DESCRIPTION

The present disclosure is directed to systems such as a moving packed bed processing plant that utilizes medium temperature heating and superheating of process materials to produce gas and solid products. As discussed below, processing plants configured in this manner provide advantages such as lower energy costs and lower CO₂ footprints allowing for more economical production of gas and solid products. Additionally, in processes such as hydrogen production, processing plants configured in this manner provide for the production of large solid carbon particles in comparison to conventional hydrocarbon pyrolysis systems. These large solid carbon particles are easier to handle and allow for energy storage in the particles at high temperatures.

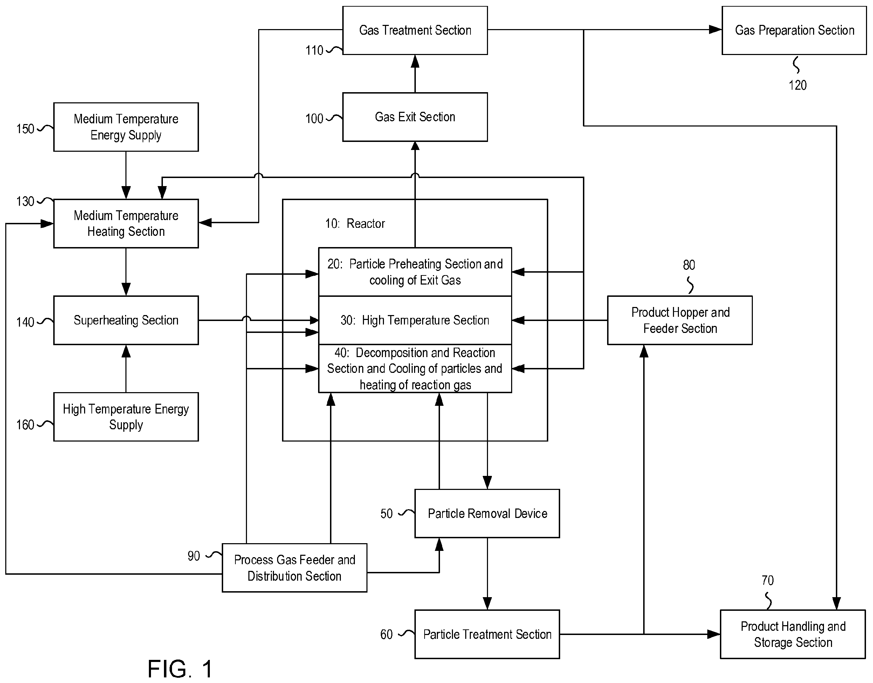

Fig. 1 is a block diagram of a system such as a moving packed bed processing plant that utilizes medium temperature heating and superheating of process materials to produce gas and solid products. The system of Figure 1 includes a main reactor 10 of a moving packed bed of particles that includes a particle preheating section 20, a high temperature section 30, and a decomposition and reaction section 40. The system further includes a particle removal device 50; a particle treatment section 60; a product handling and storage section 70; a product hopper and feeder section 80; a process gas feeder and distributions section 90; a gas exit section 100; a gas treatment section 110; a gas preparation section 120; a medium temperature heating section 130; a superheating section 140; a medium temperature energy supply 150; and a high temperature energy supply 160.

In the main reactor 10, the moving packed bed of particles flow from a top of the main reactor 10 to a bottom of the main reactor 10 in a packed bed configuration using gravity. In some implementations, the moving packed bed is fully loaded from the top to the bottom of the main reactor 10 with particles that are continuously removed from the bottom of the main reactor 10 and new particles are loaded at the top of the main reactor 10.

In some implementations, the particles may be of any size or shape and can be catalytic, reactive or inert. The particles need to be physically stable up to the decomposition temperatures and typically, the particles can be a carbonaceous material such as carbon, coke, graphite, or the particles can be any other material that can take the heat of the system without decomposition or melting, including ceramics such as alumina, silica, silicon carbide, or zirconia.

As the particles move from the top of the main reactor 10 to the bottom of the main reactor 10, a gas flows from the bottom of the main reactor 10 to the top of the main reactor 10 to form a counterflow heat exchanger. An inner portion of the main reactor 10 is configured to assure that the flow of the particles downwards is continuous, and that a necessary mixing of the gas and the particles take place. In some implementations, this includes providing static mixing devices such as cones or wings inside the main reactor 10.

During operation, the main reactor 10 recovers energy at the top particle reheating section 20 of the main reactor 10 and the bottom decomposition and reaction section 40 of the main reactor 10, and transfers the recovered energy to the middle high temperature section 30 of the main reactor 10, thereby reducing the overall energy use of the main reactor 10. To assist in recovery of the energy, the main reactor 10 is insulated to retain energy inside the main reactor 10 and assure that a correct temperature profile is maintained.

In some implementations, the temperature profile assures that there is enough contact time at the reaction temperature for the reaction to take place and to cool the particles at the bottom and the gas at the top to low enough temperatures for easy handling.

The particle preheating section 20 of the main reactor 10 acts as a heat exchanger to cool the gas being circulated through the moving packed bed before it exits the main reactor 10 and to transfer the energy to the particles that are loaded into the main reactor 10, thereby preheating the particles. Some decomposition or reaction of the gases may take place in the particle preheating section 20.

The high temperature section 30 of the reactor utilizes high temperature superheated gas or preheated particles from the superheating section 140 to transfer energy from the superheating section 140 to the preheated particles flowing from the particle preheating section 20 and to raise the temperature to the decomposition or reaction temperature. The gas in the high temperature section 30 is heated to the decomposition or reaction temperature and some decomposition or reaction of the gases can take place in this section.

In the decomposition and reaction section 40 of the main reactor 10, the particles that have been superheated in the high temperature section 30 supply heat to the gas to decompose the gas to its molecular constituents and act as a main chemical reactor. The decomposition and reaction section 40 acts as a heat exchanger to cool the particles before the particles exit the main reactor 10 and to transfer energy from the super-heated particles to heat the cooler gas that is moving upward through the main reactor 10.

In some implementations, a volume of the decomposition and reaction section 40 is configured to provide optimum reaction time. For example, the volume of the decomposition and reaction section 40 may provide for an introduction of particles and/or gases at various levels where a size and volume of the main reactor 10 can increase if the particles increase or reduce if the particles reduce during the reaction. Those of skill in the art will appreciate that the main reactor 10 may be designed to keep the particles flowing, to mix them and to assure that there is an even distribution of the gas. If the particles grow during the reaction, it will increase a volume in the decomposition and reaction section 40 of the main reactor 10, and this increase in size of the particles can be accommodated by increasing the reactor size 10. Similarly, a decrease in the size of the particles will result in a reduction in volume and to maintain the design parameters of the main reactor 10, the decomposition and reaction 40 may be designed to decrease in diameter.

The particle removal device 50 is configured to regularly remove particles from the main reactor 10. The particle removal device 50 may utilize technologies such as a scraper, rotating feeder devices, or piston feeders to remove particles of the moving packed bed from the main reactor 10. In some implementations, the particle removal device 50 may also include a lock hopper system that assures that the main reactor 10 can be operated under the gas and pressure conditions needed for a desired process and that prevents other unwanted gases such as oxygen from entering the main reactor 10.

In some implementations, the particle removal device 50 may also include systems that provide cooling, that can be active or passive cooling using liquids or gases. Additionally, in some implementation, the particle removal device 50 is designed to accommodate particles that have taken part in a reaction and changed in size.

After particles are removed by the particle removal device 50, the particles are treated within the particle treatment section 60. For example, the particle treatment section 60 may utilize heat exchangers to cool particles removed from the main reactor 10 to a safe handling temperature and to recover the energy to preheat the process gas/feed gas that is utilized or to utilize the recovered energy for energy production.

The particle treatment section 60 may also sort the particles removed from the main reactor 10. The particle treatment section 60 may include a particle sorting system that prepares the product for various uses and recycles particles for continued use in the system. In some implementations, the particle sorting system may be a particle size classifier such as a sieve and can include a crusher or grinder to reduce the particle size or to remove the deposited layers.

In some implementations, the particle treatment section 60 may further transfer recycled particles to the particle feeder section 80. The particle treatment section 60 may include any type of transfer system including a pneumatic transfer in a pipe or conveyors. In some implementations, the transfer systems may allow the particle treatment section 60 to receive fresh particles, where the particles will be loaded for transport to the product hopper and feeder section 80.

The product handling and storage section 70 is configured to receive solid product from at least one of the particle treatment section 60 or the gas treatment section 110, and to classify and pack the received solid product for shipment. In some implementations, the product handling and storage section may include various packing and storage methods ready for dispatch to customers, such as bulk bags, drums, containers or bulk handling equipment such a silos.

The product hopper and feeder section 80 is configured to receive prepared recycled particles or fresh particles from the particle treatment section 60 in a hopper that will prepare the particles for loading into the particle preheating section 20 of the main reactor 10 or in the medium temperature heating section 130. The product hopper and feeder section 80 may include a lock hopper system to assure that no additional gases enter the reactor system 10. In some implementations, the product hopper and feeder section 80 can be part of the gas exit system 100.

In some implementations, the product hopper and feeder section 80 may include a feeder that feeds the particle preheating section 20 in a controlled manner or that is positioned at a top part of the main reactor 10. The product hopper may have a feed section into the particle preheating section 20 that assist with the even distribution of the particles over the packed bed. In some implementations, this feed section can be a mechanical device or other means of mixing and distribution such as multiple feed legs and static mixing inside the hopper. In some implementations, the feed section can be used to feed particles to other parts of the main reactor 10. It will also feed particles to the medium temperature heating section 130.

The process gas feeder and distributions section 90 is configured to supply gas entering the bottom of the main reactor 10 and to spread and to distribute the gas over the bottom area of the main reactor 10. In some implementations, the process gas feeder and distributions section 90 may include a sparger system to distribute the process gas.

The process gas can be preheated by energy recovery systems in the particle removal device 50, the particle treatment section 60, the gas exit section 100, and the gas treatment section 110. If the process gas is contaminated, the gas is normally purified before the process gas is introduced into the main reactor 10. In some implementation, the process gas feeder and distributions section 90 includes systems to remove impurities and contaminants from the process gas such as carbon dioxide (CO₂), containing compounds containing sulpher, oxygen, or water before the gas is fed into various sections such as the decomposition and reaction section 40, the particle removal device 50, the particle treatment section 60, the gas exit section 100, or the gas treatment section 110.

Some of the process gas from the process gas feeder and distributions section 90 can be introduced at various sections of the main reactor 10 to optimize the conversion or decomposition. The process gas can also be used in the materials feed into medium temperature heating section 130 as a partial feed into the superheating section 140.

Due to the necessity of a reliable supply of process gas, in some implementations, the process gas feeder and distributions section 90 will include a buffer tank system and a compressions system to supply a correct pressure for the main reactor 10.

The gas exit section 100 includes one or more heat exchangers and is configured to cool the gas to a safe handling temperature. The cooling may be accomplished through internal or external cooling with liquids or gases, for example. In some implementations, the energy transferred from the hot gas by the heat exchanger may be used to preheat the gas fed to the process gas feeder and distributions section 90 and the medium temperature heating section 130.

In some implementations, the gas collection and exit section 100 can be inside the main reactor 10, where in other implementations it may be in other sections such as the product feeder section 80.

In some implementations, the gas treatment section 110 may include two subsections. The first subsection includes a filter that filters fine solid materials, such as carbonaceous material, metals, or ceramics, from the process gas stream. In some implementations, the filtering is performed with cyclones or other filter systems such as cloth filters. The gas treatment section 100 may then transfer the solid materials to the product handling and storage section 70 and/or to the second subsection of the gas treatment section 110.

The second subsection of the gas treatment section removes unwanted gases and liquids. The gaseous stream exiting the filter system of the first subsection may contain other gases such as unreacted feed gas, byproducts such as hydrocarbons and inert gases. If inline water cooling is used in the gas treatment section 110, the gas may also contain some steam. The removal of the other gases such as unreacted feed gas, byproducts such as hydrocarbons and inert gases, and steam may be performed with chemical and mechanical means such as pressure swing adsorption (PSA), membranes, cyclones or adsorbents that can be regenerated such as activated carbon, silica gel or Metal-organic frameworks (MOFs).

The gas treatment section 110 sends the cleaned product gas stream to section 120 for the preparation of the gases for use and/or sales. Further, the gas treatment section 110 sends the gases ready for recycling to the process gas feeder and distributions section 90, or for preheating in a particle treatment section 60, the gas exit section 100, or the medium temperature heating section 130, or the gas treatment section 110 may send the gas as part of the material used for superheating in the superheating section 140. In some implementations, the gas treatment section 110 may also compress the gases.

At section 120 process gas is prepared for use and/or sale. In some implementations, this may include the compression or liquefaction of gases. Section 120 may include devices such as holders or tanks or intermediate storage before dispatch to customers. Further, at section 120, some of the gas may be recycled to the filter subsystem of the gas treatment section 110 to assist with blowback and cleaning, and as a feed into the medium temperature heating section 130. In some implementations, the gas may also be used as a material to assist with heat transfer in various sections of the reactors such as the particle removal device 50, the particle treatment section 60, and the gas exit section 100.

The medium temperature heating section 130 may utilize medium temperature energy from the medium temperature energy supply 150 to preheat the solids or gases to a first defined temperature before introduction to the superheating section 140 where the solids or gases will be heated to the desired reaction temperatures or above (a second defined temperature). In some implementations, the first defined temperature may be below a commercially optimum temperature as dictated by a total cost of production and commercial application of the reaction process.

The energy and temperature available from the medium temperature energy supply 150 will determine the design of the energy transfer mechanism, but in some implementations the medium temperature energy supply 150 can include gas-to-gas, liquid-to-gas, gas-to-solid and liquid-to-solid heat exchangers. Energy from the medium temperature energy supply 150 can include waste heat, energy from nuclear reactors and/or renewable energy.

The medium temperature heating section 130 may be used to heat the particles and/or the gases before transferring the particles and/or the gases to the superheating section 140. This can optimize the energy consumption of the process by using medium temperature heat sources. The feed for the medium temperature heating section 130 can be fresh particles or particles recycled from the product hopper and feeder section 80 and/or gases from the process gas feeder and distribution section 90, the gas treatment section 110, or the gas preparation section 120. If the temperature of the products from this section is high enough to sustain the reaction in the main reactor 10, the products can be directly fed into the high temperature section 30 of the main reactor 10 without superheating.

In some implementations, the gas supply may utilize a compressor to supply a correct pressure to the medium temperature heating section 130 that will then flow through to the superheating section 140 and the high temperature section 30 of the main reactor 10. The pressure inside this reactor will be adapted to system requirements and the system may include technologies to increase or decrease the pressure, such as a lock valve system to maintain a desired pressure. In case of particle heating to medium temperatures the system can include lock hopper systems to receive and supply the particles in continuous, semi-batch or batch mode.

The superheating section 140 increases the temperature of the feed materials from the medium temperature heating section 130 to the reaction temperatures or above. If medium heat from the medium temperature energy supply 150 is not available for preheating in the preheating section 130, the superheating section 140 can also accept feed particles from the particle treatment section 60 and the product hopper and feeder section 80 and feed gases from the process gas feeder and distribution section 90, the gas treatment section 110, and the gas preparation section 120. The superheating section 140 may have different designs, but it is in principle a heat exchanger to transfer high temperature energy to the process materials including the particles and/or the gases. The feed of material to the superheating sections 140 will be from the medium temperature heating section 130. This superheated material will be transferred to the high temperature section 30 of the main reactor 10. It can be of two types of superheating designs as follows:

In some implementations, the superheating section 140 utilizes gas heating. With gas heating, gases from the medium temperature heating section 130 can be superheated in a chamber that is configured to withstand the required temperature, gases, gas velocity, and pressures. The chamber may be externally cooled with water or other fluids. Further, the chamber may can contain linings that assist with handling the process parameters.

In some implementations, electrical systems may heat the gases to the desired temperature. The electrical systems may include resistance heating or heating with an arc discharge, such as in transfer- or non-transfer plasma system, or plasmas using alternative current, direct current, microwave or radiofrequencies. In other implementations, a light source, such as a light from a concentrating solar device, may be utilized to heat the gases.

In some implementations, the superheating section 140 may include solid materials such as a fixed packed bed of materials. The solid materials can be heated with resistance heating or induction using high frequency alternative currents including radiofrequencies and microwaves. The solid materials can also be heated with a light source such as from a concentrating solar device. The gas is then flowed through this packed bed heat exchanger to heat up the gas to a desired temperature before the gas is introduced into the high temperature section 30 of the main reactor 10.

In some implementations, the gases may be superheated with high temperature non-contact heat exchangers that utilize waste gas or gases from other energy sources such as concentrating solar or nuclear reactors. These heat exchangers may also be heated with a light source such as from a concentrating solar device. In these heat exchangers the gas from the heating source and the process gas will not mix. In some implementations, this is accomplished with a typical tube design heat exchanger.

In other implementations, the superheating section 140 utilizes solids heating. In the superheating section 140, particles can be superheated in a solids superheating chamber or other systems such as a heat exchanger.

In some implementations, a solids superheating chamber is configured to receive a feed of preheated solid material from the medium temperature heating section 130 or it can receive fresh or recycled particles from the particle treatment section 60, the product handling and storage section 70, or the product hopper and feeder section 80, superheat the received the particles, and then transfer the superheated particles to the high temperature section 30 of the main reactor 10.

In some implementations, the superheating chamber may include lock hopper systems before and/or after the superheating chamber to maintain a specific atmosphere inside the superheating chamber, to allow for fresh particles to be fed into the superheating chamber, and to feed the superheated particles into the high temperature section 30 of the main reactor 10. The introduction of the high temperature particles into the high temperature section 30 of the main reactor 10 can be continuous, semi-continuous or batch depending on a design of the reactor 10.

The superheating chamber of the superheating section 140 can be of any type of device that allows the superheating of the particles such as a moving packed bed superheating chamber or fluidized or spouted beds, as discussed in more detail below.

For implementations utilizing a moving packed bed superheating chamber, the particles can be heated with a gas or without a gas utilizing, for example, gas heating, electrical heating, or heating from a heat exchanger.

When gas heating is used to superheat the particles, the bed of particles typically has a countercurrent flow with the particles introduced at a top and exiting at a bottom of the superheating chamber. In some implementations, the gas is fed into the high temperature section 30 of the main reactor 10 with the particles, where in other implementations, the gas exits through another section of the main reactor 10.

Systems that provide gas heating may include heating with inert gasses such as helium, argon or nitrogen, or the heating system may utilize process gases or oxidative gases. A type of particle and a source of the gas will determine a type of gas utilized. When the particles can handle the reactivity of the gas, a reactive gas can be used for medium temperature heating. However, these reactive gases may be prevented from entering the main reactor 10. In some implementations, the gas is from a high temperature waste gas or from a gas that is heated with other sources, such as solar or nuclear heating.

When electrical heating is used to superheat the particles, the moving bed of particles is electrically heated with resistance heating or induction heating utilizing technologies such as plasmas, radiofrequency or microwaves. While in some implementations electrical heating of the particles is accomplished without the use of gas, in other implementations, such as those utilizing plasma heating, a small amount of gas is utilized to heat the particles.

When a heat exchanger is used to superheat the particles, the heat exchanger may be a tube heat exchanger that provides heating from an exterior of the tube while particles flow inside the tube. The particles can be of a packed bed design or can loosely move through the tubes of the heat exchanger. Any suitable form of heating can be applied to the heat exchanger that is used to superheat the particles such as direct solar radiation or gas heating using waste gas or gas from nuclear heating or electrical heating.

It will be appreciated that the particles usually do not contain any gases and the particles will be fed directly into the high temperature section 30 of the main reactor. In this design, fresh particles will be fed from the medium temperature heating section 130 and it will move through the superheating section 140 into the high temperature section 30 of the main reactor 10. The movement of the particles can be mechanical, pneumatic or by gravity.

As noted above, for the superheating of solids, in addition to implementations where the superheating chamber 140 includes a moving packed bed superheating chamber, in other implementations, the superheating chamber 140 for the heating of solids may include fluidized or spouted beds. In these implementations, the particles may be heated with fluidized or spouted beds using high temperature gases, internal heat exchangers or electrical heating to superheat the particles. The particles can be fed continuously, semi-continuously or as batch into the high temperature section 30 of the main reactor 10 with or without the fluidized gas via a system that separate the particles from the gas if needed.

The medium temperature energy supply section 150 is configured to supply energy from medium heat sources that are below a desired reaction temperature. In some implementations the medium heat sources is from a low CO₂ emission source such as waste heat, solar heat or heat from a nuclear reactor. The medium temperature energy supply section 150 includes suitable buffer capacity for gases or electricity needs that are built into the supply system. In some implementations, heat generated at the medium temperature energy supply section 150 can be supplied to the medium temperature heating section 130 via heat exchangers, or in implementations where the medium temperature energy supply section 150 includes gases or solids, the gases or solids can be directly fed into the medium temperature heating section 130.

The high temperature energy supply section 160 is configured to heat particles or gases to above a desired temperature needed for reactions to take place in the high temperature section 30 of the main reactor 10. In some implementations, the high temperature heat supplied to the system is from a low CO₂ emission source and can include waste heat, solar heat or heat from a nuclear reactor. Electricity can also be used as energy source to heat the feed materials to a desired temperature. In some implementations, the electric energy is from low CO₂ emissions sources including renewable electricity such as solar, wind hydro, nuclear, or if not available, other higher CO₂ footprint electricity can be used. The electricity can also be from waste heat recycled from this process. Suitable buffer capacity for gases or electricity needs to be built into the supply system.

One of skill in the art will appreciate that the configuration described above where material is preheated in the medium temperature heating section 130 and then superheated in the superheating section 140 provides for superheated material in the main reactor. This, along with the ability to utilize reactors that are best suited for a specific reaction or process and the moving packed bed in the main reactor 10 allows for improved energy record that suits desired processes.

For example, different implementations of the described configurations utilizing medium temperature heating and superheat provide advantages such as: lowering energy costs due to using thermal heat for medium temperature preheating and heat recovery inside the reactor (by a of factor 2-6 times less energy); lowering CO₂ footprint than normally heated devices; allowing for the use of catalytic particles; providing high temperatures by topping-up the initial energy with electricity (from nuclear or green electricity for low CO₂ footprint); more manageable control processes; high availability; dual use for moving packed bed as process reactor and energy storage; and integration with renewable energy electricity and waste energy.

Additional advantages of the configurations described above includes the ability to use these configurations in many reactors and processes using different feedstock and produce different products; the ability to use these configurations in waste (CO₂ and other waste such as Polychlorinated biphenyl (PCB) or Municipal Solid Waste (MSW)) recycling; the ability to use these configurations with waste energy from other sources; and the ability to integrate these configurations with other high temperature renewable sources such as concentrating solar and low CO₂ energy sources such as nuclear.

Yet further advantages of the configurations described above include the ability of the configurations to produce a solid product that is easy to handle and will minimize handling area; that the produced solid product is a separate sellable product; that the produced solid raw material is easily available; and that the produced solid product can have unique properties such as high purity and crystalline structures.

Still further advantages of the configuration described above include the production of a gaseous product that is concentrated and that can be cleaned easily (small amount of gaseous and solid byproducts); that the configuration allows for the recovery of solid material from other materials in the case of catalytic process and recycle catalyst; that the configuration can be used for the processing of various different feedstocks and products including but not limited to hydrogen and carbon production, CO production, tetrafluoroethylene (TFE) production and metals production; and that the configuration can be scaled-up easily with technologies that are currently available.

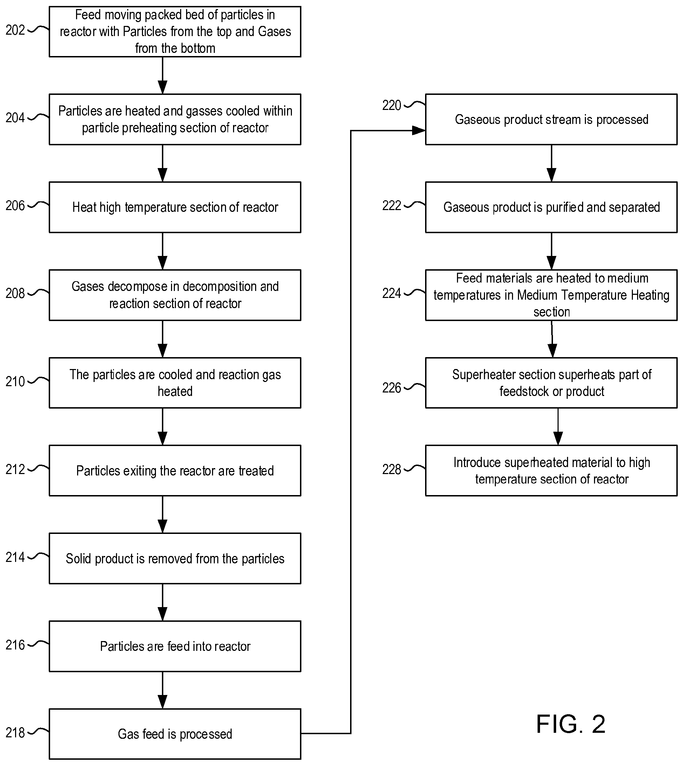

Figure 2 is a flow chart of one form of a method for operating a system such as a moving packed bed processing plant utilizing medium temperature heating and superheating of processing materials to produce gas and solid products. It will be appreciated that in some implementations, the method described below may be utilized in conjunction with the configuration of the moving packed bed processing plant described above in conjunction with Figure 1.

In some implementations, an electronic control system (not shown) communicates with one or more portions of the moving packed bed processing plant described above in conjunction with Figure 1 to assist in implementing control methods such as those described in the present application in conjunction with Figure 2. It will be appreciated that an electronic control system may include one or more servers and/or other computing devices that comprise a processor, a controller, and/or other processing circuitry that may be hardwired to perform specific operations or configured to execute instructions stored in memory to perform operations as part of control methods such as those described in the present application.

At step 202, a moving packed bed (MPB) of a main reactor, such as the main reactor 10 described above, is continuously fed with particles from the top and fed with process gases from the bottom in a counter current configuration. The particles can be of any size or shape and can be catalytic, reactive or inert. The particles need to be physically stable up to the decomposition temperatures and typically, the particles can be a carbonaceous material such as carbon, coke, graphite, or the particles can be any other material that can take the heat of the system without decomposition or melting, including ceramics such as alumina, silica, silicon carbide, or zirconia. In case of a particle that takes part in a reaction such as those described below, the particle is selected to assure that the particle does not melt and that it gives a good heat transfer, heat retention and heat transfer in the reactor. The particles can have a catalytic activity to reduce the temperature of the reaction or assist with specific solid material production. Typical catalytic materials including metals such as nickel, iron, zinc or precious metals and can also be structures formed from nano materials. The particles can be recycled from the bottom of the MPB or the main reactor 10 and the temperature can be kept at a higher value to retain energy. In some implementations, a portion of the particles can be sent to the medium temperature heating section 130 or the superheating section 140, for example, for electrical or gaseous heating. The number of particles fed to the main reactor 10 is designed to take the heat capacity, density, sphericity and size distribution, for example, into account to optimize the heat transfer and to operate the bed successfully.

At step 204 particles are preheated and gases are cooled within a heat exchanger within particle preheating section 20 of the main reactor 10. In some implementations, a temperature of a particle will increase from approximately ambient temperature to above a decomposition or reaction temperature, such as approximately 1,200 °C, and countercurrent gases may cool from approximately 1,200 °C to an approximate 300 °C outlet temperature. This section recovers the heat and energy from the gases and transfers it to the particles. It can also act as part of the reaction system.

At step 206, the MPB of the main reactor is heated in a middle section, such as the high temperature section 30 of the main reactor 10, to a temperature that will decompose process gases, such as hydrocarbon gases, for example. In some implementations, heated gases are introduced into the moving packed bed, where in other implementations, heated solid particles are introduced to the MPB that can carry the heat into the main reactor. The heating can be electrical heating, heating from waste heat, or from systems that are designed to supply heat such as High Temperature Gas-cooled Nuclear Reactor (HTGR). Particles are superheated with superheated gases or particles that are heated in the superheating section 140 to the reaction temperatures needed, typically higher than 900 °C and usually above 1,200 °C. In some implementations, the preheated gases and particles are one of the process feed gases or product gases or materials. This minimizes a cleaning of the product streams from undesired products or inerts. It will be appreciated that this section should be designed to assure good heat transfer from the superheated materials to the rest of the bed. This section can also act as a reaction section.

At step 208 the hydrocarbon gases decompose and react in the main reactor forming materials such as hydrogen and solid carbonaceous material. The particles of the moving packed bed of particles can increase in size with material that is deposited on the particles by the decomposition of the feedstock gases. In some implementations, a portion of the decomposition material will not deposit on the particles and will exit with the product gas stream at the top of the reactor. The particles can be at ambient temperature at the inlet or can be preheated or hot and can be recycled from the end product exiting from the bottom end of the reactor. In some cases, the particles can take part in the reaction with the gases and it can reduce the size of the particles. The design of the reactor uses the movement of the particles as an integral part of the energy recovery and the volume, heat capacity and mass flow of the particles needs to be optimized for the lowest energy use in the production of the products.

The decomposition and reaction section of the main reactor provides enough reaction time and temperature for the reactions to go to economically complete conversion. The main reactor 10 is designed in such a way that its size provides enough contact time between the particles of the moving packed bed and the feed gas for the reactions to take place. Typically, in the case of hydrogen production from hydrocarbons, decomposition or pyrolyzes of the hydrocarbons and deposit of solid carbon on the particles occurs over a certain time period. In the case of hydrogen from hydrocarbons it can deposit carbon on the particles and the design must take the growth of the particles into account. This must be optimized for maximum heat transfer of the energy from the particles to the gasses

The feed gases that enter the main reactor from the bottom can be at ambient temperature and pressure or it can be preheated and can have different pressures. The MPB can be operated at ambient pressure or at reduced or increased pressures.

The main functions of the MPB is to provide relatively long contact times for the feed gases to react or to decompose at a high enough temperature to be economic, supply a base for the growth of material on the particles, recover energy internally for optimum energy use and act as an energy storage system.

The MPB is a large reactor, and it acts as a storage of energy. The bed will retain energy with minimum losses and it can be run intermittently or with a load following method. It can therefore produce products on demand, and it does not need to be continuous.

The main reactor 10 is designed to assure even distribution of the gas flow through the main reactor 10 and to give a certain pressure drop from top to bottom.

The decomposition or reaction temperature is the temperature where the feed gases substantially decompose to product gases and and/or solid materials. It can typically be above 600 °C in the case of catalytic particles or above 900 °C if it is non-catalytic particles for hydrocarbon decomposition. This design provides a relative long contact time and the reaction kinetics of the specific feed gas will determine the contact time and temperature profile of the reactor.

In some implementations, the reactor can have side streams of gases or solids to optimize the energy transfer and heat recovery. This can be extraction of material or feed of material.

If the system is used with reactive gases such as CO₂ to produce CO, or CF₄ to produce carbon fluoride gases such as TFE, the solid particles will participate in this reaction and reduce in size.

In the case of other reactions, typically where the solid materials act as co-reagent, the decomposition and reaction section of the reactor 10 is optimized for such reaction kinetics.

Step 210 acts as a heat exchanger to recover energy from the hot particles and heat up the feed gas from their feed temperature that can be ambient or if preheated, at the preheated temperature. In some implementations, such as hydrocarbon decomposition, a temperature of the particles with coated carbon exiting the reactor can be at temperatures below approximately 300 °C, which makes it relatively easy to handle without combustion. Typical temperatures can be between approximately 300 °C at a bottom and approximately 1,200 °C at a top of this section. In the case of other reactions, typically where the solid materials act as co-reagent, the decomposition and reaction section of the reactor 10 is optimized for such reaction kinetics.

The particles exit the bottom of the MPB of the main reactor 10. These particles can be coated with material such as carbon to provide larger particles or the particles can be smaller because of reaction with the feed gases. The size of the particles should be considered when designing these systems for a mass and energy balance. The particles, and especially the particles with a coating, can be of any different crystallography, and in the case of carbonaceous materials, it can be graphite, structured carbon, non-structured carbon, amorphous, normal carbon, nano carbon, sheets, filaments, porous carbon or any form that will deposit on the particles. These particles will still be at a higher temperature and will needs to be treated.

At step 212, the particles are treated. The particles exiting the main reactor 10 can still be at a temperature that is not safe for handling, and in this case, the particles need to be treated to remove the heat. The particles can have different forms and sizes, and the particles need to be classified, and in the case of hydrocarbon decomposition, the deposited carbon needs to be removed for the recycling of the particles. If the particles are a solid carbon, it can be a size classification with the certain size fraction recycled back to the top of the reactor. Other particles can have additional treatment to remove the deposited material before recycling.

At step 214, after separation, a solid product is removed that may be sold. Filtered material from the gas outlet will be collected and can be a product or handled as waste.

At step 216, particles, such as those previously removed from the main reactor 10 and processed, are feed into the top of the main reactor 10 as in step 202. As discussed above, the particles can be of any size or shape and can be catalytic, reactive or inert. The particles need to be physically stable up to the decomposition temperatures and typically, the particles can be a carbonaceous material such as carbon, coke, graphite, or the particles can be any other material that can take the heat of the system without decomposition or melting, including ceramics such as alumina, silica, silicon carbide, or zirconia. In case of a particle that takes part in the reaction, the particle is selected to assure that the particle does not melt and that it gives a good heat transfer, heat retention and heat transfer in the reactor. The particles can have a catalytic activity to reduce the temperature of the reaction or assist with specific solid material production. Typical catalytic materials including metals such as nickel, iron, zinc or precious metals and can also be structures formed from nano materials. The particles can be recycled from the bottom of the MPB or the main reactor 10 and the temperature can be kept at a higher value to retain energy. In some implementations, a portion of the particles can be sent to the medium temperature heating section 130 or the superheating section 140, for example, for electrical or gaseous heating. The number of particles fed to the main reactor 10 is designed to take the heat capacity, density, sphericity and size distribution, for example, into account to optimize the heat transfer and to operate the bed successfully.

At step 218, the gas feed is processed. More specifically, the process gas is fed into the main reactor 10 from the bottom as a counterflow to the particles. The process gas can be preheated with energy sources from the medium temperature energy supply 150 and the high temperature energy supply 160, or from internally recycled energy from the particle removal device 50, the particle treatment section 60, the gas treatment section 110 and the pas preparation section 120 to optimize energy use or it can be at ambient temperature. The pressure of the process gas is designed to take a total pressure drop over the main reactor 10 into account. The quality of the process gas can have an influence on the deposited material, solid material exiting the reactor and as well as the product gas produced. The process gas can be from a natural source, from bio processes or it can be waste material usually flared. The quality of the solid and gaseous products from this plant will determine what the quality and purity of the process gas feedstock will be. Typical contaminants in the feedstock can be carbon oxides, Sulphur oxides or other chemicals containing Sulphur or oxides. In some implementations, these will be removed before the plant, but in some cases, it can be used and then the solid and gaseous products will have traces of these products as contaminants. The process gas can pyrolyze to form other gases and solids, or it can react to form new gases and reduce the size of the particles.

At step 220, the gaseous product stream is processed. The gaseous product stream contains the gasses that form during the decomposition process and will mostly be the main product gas with some unreacted feed gases as well as other gases that form in the process. In the case of a hydrocarbon feed gas, the typical other hydrocarbon gases that can form in the process is acetylene (C₂H₂) and ethylene (C₂H₄) and it can also form CO if there are oxygen containing materials in the feedstock. Sulphur containing feed material can include sulfurous gases such as SOx or H₂S. This stream can also contain finely divided carbonaceous solids and it can be in various physical forms such as soot, spherical, nano materials, fibers and sheets. In some implementations, the gaseous products will consist of gases that form in the main reactor 10 between the solid material and the feed gas. Typical examples are when CO₂ is fed into a carbon bed to produce CO or when CF₄ is fed to produce carbon fluoride gases such as TFE.

At step 222, the gaseous product is purified and separated. This will include the cooling of the gas and the removal of particulates and other gases. Some of the particulates and gases can be side products. The energy recovered from the cooling heat exchanger can be used as a preheater of the feed gas or the gases that is used for the superheated section.

The gaseous products are the cleaned gaseous products, and it will contain the product gas and can also include some other gaseous byproducts or gases.

At step 224, feed materials are preheated to medium temperatures. In this section any energy source that can transfer medium temperature heat to the feed material can be used to minimize energy consumption and lower the CO₂ footprint of the process by recovering energy from waste heat or to use energy from medium temperature heat sources. The medium temperature is not enough to drive the reaction to economically complete conversion, but it will minimize the use of the superheated energy in the superheating section 140. The material used for medium temperature heating can be solids or gases and it can be inert materials such as gases or solids that is inert for the process, feed gases or some of the product gases or solids. Products from the medium temperature heating section 130 is fed into the superheating section 140.

Waste-heat, heat from a special reactor such as a HTGR or electrical heating using induction, plasmas or resistance heating may be used as a low temperature energy source. It can also be from solar heating using concentrating solar. This energy source may not give high enough temperatures for commercially viable production, but is used to add energy to the system, reduce the energy use per unit produced, and reduce the CO₂ footprint.

At step 226, the superheater section 140 superheats some part of the feedstock or product to produce heated material that can be introduced into the high temperature section 30 of the main reactor 10 at step 228. This material will typically be at a higher temperature than the average temperature in the high temperature section 30 of the main reactor 10 and is used as energy transfer medium. The temperature of this section is designed to give a correct amount of energy and temperature to the process. Usually this is a smaller amount that is heated to a high temperature to give a good heat transfer in the high temperature section 30 of the main reactor 10. In some implementations, superheating methods will include plasma heating that use an electric arc within the gas and then give a high energy transfer to the gas at high temperatures. Plasma temperatures can be as high as 10,000 °C, but in this case the temperatures that are suited to the process will be used. Solid materials can also be superheated and materials such as carbon and silicon carbide can be heated with induction or resistance heating to temperatures as high as 2,200 °C for SiC and 3,600 °C for carbon.

Waste-heat, heat from a special reactor such as a HTGR or electrical heating using induction, plasmas or resistance heating is used as a high temperature energy source. It can also be from solar heating using concentrating solar. The temperatures of this energy source will be at or above the temperature needed for commercially viable production.

The following provides illustrative examples for utilizing configurations of a moving packed bed processing plant and processes for utilizing preheated and superheated materials to produce gas and solid products as described above in conjunction with Figures 1 and 2.

### Example 1: Hydrogen production using medium temperature heating and superheating of gases and using hydrocarbons as feedstock

In one illustrative example, pyrolysis of hydrocarbons in a moving packed bed (MPB) of carbon particles comprising materials such as coke, graphite or carbon is utilized to produce a gaseous hydrogen product and coated solid carbon particles. In this example, the carbon particles are not catalytic and the medium temperature heating and the superheating are done with a gas.

Recycled screened carbon particles with a desired particle size distribution, such as 1 mm to 100 mm in diameter or with a particle size distribution that will optimize the pressure drop across the reactor, the distribution and flow of solids and the flow of gases through the packed bed, is introduced at the top of the main reactor 10 via the product hopper and feeder section 80. In some implementations, fresh carbon particles can be introduced via the product hopper and feeder section 80 into the main reactor 10. The points of introduction of solid material into the main reactor 10 can be different points in the particle preheating section 20, the high temperature section 30, or the decomposition and reaction section 40 of the main reactor 10, and may be modified as part of a design and optimization of the process.

A hydrocarbon, such as natural gas, methane, ethane, a waste hydrocarbon source or biomethane etc. is introduced at a bottom of the main reactor 10 at a pressure and temperature below the decomposition parameters of the hydrocarbon and at parameters that suit the pressure used inside the main reactor 10 via the process gas feeder and distribution section 90. In some implementations, these temperatures will be below 600 °C and the pressure below 15 Bar (gauge), typically below 5 Bar (gauge). To optimize the energy efficiency, the gases can be preheated. The hydrocarbon gas can be treated before it enters the main reactor 10 to remove unwanted species from the gas including Oxygen containing gasses such as O₂, CO₂, water etc. and Sulphur containing materials such as H₂S, SOₓ or mercaptans. This pretreatment minimizes the contamination of the solid and gaseous streams.

The main reactor 10, comprising the particle preheating section 20, the high temperature section 30, and the decomposition and reaction section 40 has an inner lining with material that does not react with this type of products and that can operate for a long duration at the temperature of the various sections. In some implementations, the inner lining includes materials such as firebrick, alumina, silica, zirconia, graphite, carbon or silicon carbide or mixtures of these materials. In some implementations, the inner lining can have an insulation layer between the inner liner and the reactor shell to minimize energy loss. The reactor shell can be cooled to assure long operation times, especially at the high temperature zones, but the basis is to minimize any forced cooling and use mostly natural convection cooling at the outside of the reactor. The outer shell of the reactor will usually be metal and can be from any material that suit the process parameters. The design of the diameter and thickness will be determined by the pressure and volume needed for reaction.

In this example, the heating in the medium temperature heating section 130 is done in a gaseous heating chamber with medium temperature thermal energy sources from the medium temperature energy supply 150. The medium temperature sources will heat the gases to a temperature below the commercially optimum temperature and will be used as a preheater for the gases before it is introduced to the superheating section 140. The temperature of decomposition of hydrocarbons starts at about 600 °C and reach an optimum above 1,200 °C. This section will typically heat the gases to temperatures below 1,000 °C. The gases that can be used for medium temperature heating can be fresh hydrocarbon feed gas from the process gas feeder and distribution section 90, or recycled hydrogen from the gas treatment section 110. In some implementations, a non-reactive gas such as nitrogen, helium or argon can also be introduced for process optimization. Typical energy sources from the medium temperature energy supply 150 can include low CO₂ footprint energy from nuclear reactors, waste energy and solar energy. The heat transfer will typically be with a heating gas to process gas heat exchanger.

The gases from the medium temperature heating section are fed into the superheating section 140 where the temperature is increased to temperatures high enough to provide sufficient heat transfer into the MPB and for the reactions to take place in a commercial economic method. In some implementations, the temperatures of the gas exiting the superheating section 140 into the high temperature section 30 of the main reactor 10 is above 600 °C and up to 6,000 °C. This superheating is typically done in a gaseous heating chamber using an electrical system, such as a plasma system that can be a non-transfer or transfer type plasma using low CO₂ footprint electricity such as nuclear, hydrogen, wind, solar, hydro or biomass-based electricity from the high temperature energy supply 160. The gases can easily be heated to very high temperatures and this provides a driving force to optimize heat and temperature to the cooler bed particles and gases in the high temperature section 30 of the main reactor 10. To optimize electrode consumption and energy optimization some hydrocarbons can be introduced into the plasma system from the process gas feeder and distribution section 90. This high temperature gas is then introduced into the high temperature section 30 of the main reactor 10 for the heating of the carbon particles to the treatment temperature that can be from 400 °C to 2,000 °C. The contact time of the hydrocarbon introduced and the kinetics in the reactor will determine the temperatures and final design of the MPB height, diameters and internal mixing systems if any.

The gaseous hydrogen product exiting from the gas exit section 100 can be at a higher temperature of about 100 °C to 1,000 °C and be cooled and treated in the gas treatment section 110 to prepare it for other uses such as sales in the gas preparation section 120. This can include removal of particulates such as fine carbon or graphite materials in the form of spheres, flakes, nano-material or fibers and this will be sent to the carbonaceous product line in the product handling and storage section 70. Typically, the amount of particles will be relatively small because most of the carbon is deposited as solid carbon on the solid carbon bed material. Further treatment will include the cleaning of the gas from other impurities and if the conversion is lower, this will contain hydrocarbons that can be recycled back to the process gas feeder and distribution section 90 or the medium temperature heating section 130. The cleaned hydrogen will be prepared as a product and can include compression, liquefaction, or any other means to sell the hydrogen in the gas treatment section 110 and the gas preparation section 120.

The solid material that exits the main reactor 10 at the particle removal device 50 will be coated with a carbon layer. This layer can be a typical amorphous carbon, crystalline carbons such as graphite, fibers, flakes. It will typically be a dense layer that will increase the size of the original carbon particle.

The solid material that exits the main reactor 10 at the particle removal device 50 can still be at a higher temperature of typically 100 °C to 1,000 °C and needs to be treated in the particle treatment section 60 in such a manner to minimize any reaction or combustion. In some implementations, it will be treated in a non-oxidative atmosphere and the temperature will be reduce to a safe handling temperature of below 100 °C. This can be used as a heat exchanger to preheat the gases that is used in the main reactor 10 or for other energy uses. In the particle treatment section 60 the particles will be classified and treated to select a section that will be recycled. This treatment can include the removal of the deposited layers or the reduction of the particle size to match the reactor feed product at the product hopper and feeder section 80.

The carbon product exiting from the particle treatment section 60 and the gas treatment section 110 will be sent to the solid carbon product handling and storage section 70 where, for example, it will be classified, sorted and packed for sales.

The advantages of the process in Illustrative Example 1 include at least the following:
All the material used is carbon based and no additional material or chemical compound is introduced in the solid carbon material. This provides relatively pure carbon products that do not need chemical cleaning before sales. The carbon product will mostly be of a solid form with a minimum of fines. This makes handling of the carbon and storage easier than handling of carbon fines

The carbon bed provides a relative long contact time at a chosen temperature for the gaseous reaction to take place. Typical gaseous reaction times for this type of reaction is smaller than a few seconds for high decomposition rates and this reactor can be designed to have contacts times for the gas of typical 0.01 to above 10 seconds at temperatures up to 1,500 °C.

The carbon particles will have a long contact time from minutes to hours depending on the design and this can be used to purify the carbon particles from unwanted species such as Volatile Carbonaceous Matter (VCM), hydrogen and Sulphur containing materials and other compounds that will form gaseous substances. Waste material that contains VCM's can therefore be processed in this reactor to produce higher value solid carbon products.

The heating of the gasses with low CO₂ thermal energy sources from the medium temperature energy supply 150 will increase the efficiency of the process and will reduce the CO₂ footprint of the process. The other heat sources in the medium temperature energy supply 150 can be from waste heat, heat from solar systems or nuclear heat from advanced reactors such a HTGR. Usually, the thermal energy from a nuclear facility is a factor 2.5 to 3 times more efficient than the electrical energy and has a 2.5 to 3 times lower CO₂ footprint.

The superheating of gasses will assure good heat transfer in the high temperature section 30 of the main reactor 10. The superheating of gasses will also assist to optimize the heat transfer and correct gas and particle flow inside the reactor. It is a main method to introduce the energy into the reactor and the reactor does not need an internal energy transfer or heating system.

In some implementations, the superheating is done electrically, and this can be done with low CO₂ footprint electricity and with surplus electricity or when the price of electricity is low. Energy from the exit product streams including gaseous from the gas exit section 100 and the gas treatment section 110, as well as solids from the particle treatment section 60 product streams, can be recovered as electricity and used for superheating. The electric heating can be used as load following and can have a very high turndown ratio typically from 0% to 100%. Electrical heating provides a high level of control on the energy input and can be used to control the energy input and the temperature of the reactor. Various technologies for electrical heating can be used such as direct resistance heating (direct current of alternative current), indirect resistance heating (direct current of alternative current), radiofrequency and microwave frequency heat transfer.

The high temperature reactor can be designed as an energy storage system, and this can detach the heating cycle from the hydrogen production cycle and can give a continuous supply of Hydrogen without using electrical energy from an additional source or when the electricity supply is intermittent. It can also give flexibility to the system and can be used to supply hydrogen when it is needed.

The gaseous product stream from the gas exit section 100, will contain a small amount of entrained carbon (typically < 20% of the total carbon), because most of the carbon is deposited on the solid carbon materials and will be part of the carbon exiting the reactor at the bottom at the particle removal device 50. This minimizes the cleaning and filter systems required to clean the gas in the gas treatment section 110.

The typical energy consumption of normal hydrocarbon pyrolysis processes is between 10 and 30 MWh electric or 25 to 75 MWh thermal per ton hydrogen produced. With the recovery of energy from the main reactor 10 and the particle preheating section 20 and the use of efficient thermal energy in the medium temperature heating section 130, the total energy consumptions, in some implementations, may be below 5 MWh electric or 12.5 MWh thermal per ton hydrogen.

### Example 2: Hydrogen production using medium temperature heating and superheating of carbon particles and the use of hydrocarbon gases as feedstock

Pyrolysis of hydrocarbons in a moving packed bed (MPB) of carbon particles comprising materials such as coke, graphite or carbon are utilized to produce a gaseous hydrogen product and coated solid carbon particles. In this illustrative example, the carbon particles are not catalytic, and the medium temperature heating and superheating are done with carbon particles.

Recycled screened carbon particles with a desired particle size distribution, typically 1 mm to 100 mm in diameter or with a particle size distribution that will optimize the pressure drop across the reactor, distribution and flow of solids and flow of gases through the packed bed, is introduced at the top of the main reactor 10 via the product hopper and feeder section 80. Fresh carbon particles can be introduced via the product hopper and feeder section 80 into the main reactor 10. The points of introduction of solid material into the main reactor 10 can be at different points in the particle preheating section 20, the high temperature section 30, and the decomposition and reaction section 40 of the main reactor and may be part of a design and optimization of the process.

A hydrocarbon, typically natural gas, methane, ethane, a waste hydrocarbon source or biomethane etc. is introduced at a bottom of the main reactor 10 at a pressure and temperature below the decomposition parameters of the hydrocarbon and at parameters that suit the pressure used inside the reactor via the process gas feeder and distribution section 90. These temperatures will be typically below 600 °C and the pressure below 15 Bar (gauge), often below 5 Bar (gauge). To optimize the energy efficiency, the gases can be preheated. The hydrocarbon gas can be treated before it enters the reactor to remove unwanted species from the gas including Oxygen containing gasses such as O₂, CO₂ and water, and Sulphur containing materials such as H₂S, SOₓ and mercaptans. This pretreatment will minimize the contamination of the solid and gaseous streams.

The main reactor 10, comprising the particle preheating section 20, the high temperature section 30, and the decomposition and reaction section 40, includes an inner lining with material that does not react with this type of products and that can operate for long duration at the temperature of the various sections. In some implementations, the inner lining comprises materials such as firebrick, alumina, silica, zirconia, graphite, carbon or silicon carbide or mixtures of these materials. The inner lining can have an insulation layer between the inner liner and the reactor shell to minimize energy loss. The reactor shell can be cooled to assure long operation times, especially at the high temperature zones, but the basis is to minimize any forced cooling and use mostly natural convection cooling at the outside of the reactor. The outer shell of the reactor will usually be metal and can be from any material that suit the process parameters. The design of the diameter and thickness will be determined by the pressure and volume needed for reaction.

In this illustrative example, the heating in the medium temperature heating section 130 is done in a heating chamber with medium temperature thermal energy sources from the medium temperature supply 150. The medium temperature sources will heat particles from the product hopper and feeder section 80 to a temperature below the commercially optimum temperature and will be used as a preheater for the particles before it is introduced to the superheating section 140. Gases from the process gas feeder and distribution section 90, recycled hydrogen from the gas treatment section 110 or non-reactive gas such as nitrogen, helium or argon can also be introduced for process optimization in the medium temperature heating section 130, but the main heat transfer will be with the particles. The carbon particles are not sensitive for the temperature up the decomposition temperature of about 3,600 °C and this medium temperature heating section can be to any temperature below 3,600 °C, but typically below 1,000 °C. Typical energy sources from the medium temperature energy supply 150 can include energy from nuclear reactors, waste energy and solar energy. This will typically be done with a gas to solids heat exchangers. This heat exchanger can be of a design that store energy in the particles, and it can be used as system to store energy and control energy supply to the superheating section 140 and the main reactor 10.

The particles from the medium temperature heating section 130 are fed into the superheating section 140 where the temperature is increased to temperatures high enough to give a good heat transfer into the MPB and for the reactions to take place in a commercial economic method. The superheating performed in the superheating section 140 is done by heating carbon particles from the medium temperature heating section 130 using energy from the high temperature energy supply 160 such as electric heating using low CO₂ emission electricity sources, direct solar heating or heat transfer from high temperature gases including from low CO₂ footprint nuclear, solar, gases from biomass combustion or waste gases. This superheating is usually to temperatures below the decomposition temperature of carbon of about 3,600 °C and typically to temperatures of about 2,500 °C. The high temperatures are needed to give a driving force to do a heat and temperature transfer to the cooler particles and gas in the bed in the high temperature section 30 of the main reactor 10. The electric heating can include heating with plasma systems, high frequency induction with radio or microwaves and resistance heating. A small amount of recycled hydrogen from the gas treatment section 110, hydrocarbons from the process gas feeder and distribution section 90 or inert gases can be used in this section to optimize heat transfer and to assure non-reactivity or combustion. This high temperature particles are then introduced into the high temperature section 30 of the main reactor 10 for the heating of the main bed of carbon particles to the treatment temperature that can be from 400 °C to 2,000 °C. The contact time of the hydrocarbon introduced and the kinetics in the reactor will determine the temperatures and final design of the MPB height and diameters.

The gaseous hydrogen product exiting at the gas exit section 100 can be at a higher temperature of about 100 °C to 1,000 °C and be cooled and treated in the gas treatment section 110 to prepare it for uses such as sales in the gas preparation section 120. This can include removal of particulates such as fine carbon or graphite materials in the form of spheres, flakes, nano-material or fibers and the gaseous hydrogen product will be sent to the carbonaceous product line of the product handling and storage section 70. Typically, the amount of particles will be relatively small because most of the carbon is deposited as solid carbon on the solid carbon bed material. Further treatment will include the cleaning of the gas from other impurities and if the conversion is lower, this will contain hydrocarbons that can be recycled back to the process gas feeder and distribution section 90 or the medium temperature energy supply 150. The cleaned hydrogen will be prepared as a product and can include compression, liquefaction, or any other means for uses such as to sell the hydrogen in the gas treatment section 110 and the gas preparation section 120.

The solid material that exits the reactor at the particle removal device 50 will be coated with a carbon layer. This layer can be a typical amorphous carbon, crystalline carbons such as graphite, fibers, flakes. It will typically be a dense layer that will increase the size of the original carbon particle.

The solid material that exits the reactor at the particle removal device 50 can still be at a higher temperature of typically 100 °C to 1,000 °C and needs to be treated in the particle treatment section 60 in such a manner to minimize any reaction or combustion. Typically, it will be treated in a non-oxidative atmosphere and the temperature will be reduce to a safe handling temperature of typically below 100 °C. This can be used as a heat exchanger to preheat the gases that is used in the reactor or for other energy uses. In the particle treatment section 60, the particles will be classified and treated to select a section that will be recycled. This treatment can include the removal of the deposited layers or the reduction of the particle size to match the reactor feed product at the product hopper and feeder section 80.

The carbon product exiting from the particle treatment section 60 and the gas treatment section 110 will be sent to the solid carbon product handling and storage section 70 where it will be classified, sorted and packed for sales.

Advantages of Illustrative Example 2 include at least the following:
It can use a low value carbon source such as pitch coke, petroleum coke, graphite waste particles, biomass-based carbon, etc. as bed material. This minimizes initial capital cost.

The carbon bed will give a relative long contact time at a chosen temperature for the gaseous reaction to take place. Typical gaseous reaction times for this type of reaction is smaller than a few seconds for high decomposition rates and this reactor can be designed to have contacts times for the gas of typical 0.01 to above 10 seconds at temperatures up to 1,500 °C.

The carbon particles will have a long contact time from minutes to hours depending on the design and this can be used to purify the carbon particles from unwanted species such as Volatile Carbonaceous Matter (VCM), hydrogen and Sulphur containing materials and other compounds that will form gaseous substances. Waste material that contains VCM's can therefore be processed in this reactor to produce higher value solid carbon products.

All the material used is carbon based and no additional material or chemical compound is introduced in the solid carbon material. This will give relatively pure carbon products that does not need chemical cleaning before sales.

The medium temperature heating of the particles with low CO₂ thermal energy sources will increase the efficiency of the process and will reduce the CO₂ footprint of the process. It can use other heat sources in the medium temperature heating section 130 such as waste heat, heat from solar systems, nuclear heat from normal nuclear reactors or advanced nuclear reactors such a HTGR. Usually, the thermal energy from a nuclear facility is a factor 2.5 to 3 times more efficient than the electrical energy and has a 2.5 to 3 times lower CO₂ footprint. The heating of the particles with heat from a HTGR will give a more complex heat exchanger, but it can use the primary high temperature thermal energy from a HTGR and this is more efficient than using the electrical energy from a nuclear reactor.

The medium temperature heating heat exchanger filled with particles, can be used as an energy storage device and can also be used to control the process parameters such as energy, temperature and mass flow.

The superheating of carbon solids from the medium temperature heating section 130 in the superheating section 140 will assure good heat transfer in the high temperature section 30 of the main reactor 10. It will also assist to optimize the heat transfer and correct gas and particle flow inside the reactor. It is the main method to introduce the energy into the reactor and the reactor does not need an internal energy transfer or heating system.

The superheating within the superheating section 140 of the solids can be done with electrical heating. Electrical heating can be done with low CO₂ footprint electricity and with surplus electricity or when the price of electricity is low. Energy from the exit product streams including gases from the gas treatment section 110 as well as solids from the particle treatment section 60 product streams, can be recovered as electricity and used for superheating. The electric heating can be used as load following and can have a very high turndown ratio typically from 0% to 100%. Electrical heating provides a high level of control on the energy input and can be used to control the energy input and the temperature of the reactor. Various technologies for electrical heating can be used such as direct resistance heating (direct current of alternative current), indirect resistance heating (direct current of alternative current), plasma-arc heating or radiofrequency and microwave frequency heat transfer.

The use of a medium temperature heating and superheating section can use a combination of other heat sources and electrical heating to optimize the energy transfer, reactor design, energy efficiency and reduction of CO₂ footprint.

The high temperature main reactor 10 can be used as an energy store, and this can detach the heating cycle from the hydrogen production cycle and can give a continuous supply of Hydrogen without using electrical energy from an additional source. It can also give flexibility to the system and can be used to supply hydrogen when it is needed.

The gaseous product stream of the gas exit section 100 will contain a small amount of entrained carbon (typically < 20% of the total carbon), because most of the carbon is deposited on the solid carbon materials and will be part of the carbon exiting the reactor at the bottom at the particle removal device 50. This minimizes the cleaning and filter systems required to clean the gas in the gas treatment section 110.

The typical energy consumption of normal hydrocarbon pyrolysis processes is between 10 and 30 MWh electric or 25 to 75 MWh thermal per ton hydrogen produced. With the recovery of energy from the main reactor 10 and the particle preheating section 10, plus the partial use of carbon using medium temperature heating directly with a HTGR or waste energy source, the total energy consumptions in some implementations may be below 5 MWh electric or 12.5 MWh thermal per ton hydrogen produced.

### Example 3: CO₂ conversion to CO by medium temperature heating and superheating gases

The following illustrative example relates to the conversion of CO₂ to CO by reacting CO₂ gas with solid carbon containing particles in the packed moving bed. In this illustrative example, the carbon particles take part in the reaction. The carbon particles are not catalytic. The superheating is done with CO₂ that is heated in the medium temperature heating section 130 and then superheated in the superheating section 140.

The CO₂ used in this process can be captured directly from air or can be a byproduct from another process (such as ethanol production) or from waste gas (such as cement production) and will be purified to a level that will minimize side reactions or unwanted products.

The carbon containing particles can be from different sources including coke, carbon, graphite and bio-based carbon or carbon from waste such as tires. It will typically be from waste material to optimize the CO₂ footprint of this reaction. The carbon containing particles can typically contain a certain amount of hydrocarbon volatiles to give a CO gas containing some hydrogen. Hydrogen containing volatile carbonaceous matter will decompose at these temperatures to give hydrogen in the off gas. In most of the applications this can be a benefit. The carbon will be consumed in the reaction and the design will incorporate the feed of enough fresh carbon material to sustain the reaction. The particles will become smaller as it moves through the particle preheating section 20, the high temperature section 30, and the decomposition and reaction section 40 of the main reaction 10 and the product leaving the main reactor 10 at the particle removal device 50 will contain a larger amount of small particles and ash and this will be removed in the particle treatment section 60 before it is send back to the product hopper and feeder section 80 for recycling. If pure CO is needed as a product the CO₂ and carbon containing feed materials can be purified before feeding or the CO gas will be cleaned afterwards in the gas treatment section 110.

In some implementations, CO is used in processes that need it for reduction purposes, such as reduction of metals, typically in iron reduction using rotary kilns, rotary hearth furnaces or shaft furnaces or it can be used as part of syngas (CO/H₂ mixture) to produce chemicals, fuels or for reduction purposes. In most of these applications, hydrogen will be beneficial.

The main reactor 10 is designed to integrate with the use of the CO gas and when high temperature CO is needed for reduction or use, such as in Direct Reduction of Iron (DRI), the particle preheating section 20 of the main reactor 10 will be minimized and the product will be sent as a hot product to the application. In this case the MPB will mostly be used as a reactor and most of the energy recovery will be in the decomposition and reaction section 40. If cooler CO is needed, particle preheating section 20 will be designed to recover energy.

Recycled screened or fresh carbon particles with the desired particle size distribution, typically 1 mm to 100 mm in diameter or with a particle size distribution that will optimize the pressure drop across the reactor, distribution and flow of solids and flow of gases through the packed bed, is introduced at the top of the reactor via the product hopper and feeder section 80. The particles can also be introduced in different section of the main reactor 10 to optimize possible devolatilizing effects or heat exchanging.

The main product feed gas stream of the CO₂ is introduced at a bottom of the reactor at a pressure and temperature and at parameters that suit the pressure used inside the reactor via the process gas feeder and distribution section 90. These temperatures will be typically below 600 °C and the pressure below 15 Bar (gauge), typically below 5 Bar (gauge). To optimize the energy efficiency, the gases can be preheated. The CO₂ gas can be treated before in enters the reactor to remove unwanted species from the gas including Nitrogen and Sulphur containing materials such as H₂S, SOₓ and mercaptans. Contaminants such as O₂, CO₂, water and hydrocarbons can be removed or it can be beneficial, and it will depend on the application of the product gas. This pretreatment will minimize the contamination of the solid and gaseous streams.

The main reactor 10, comprising the particle preheating section 20, the high temperature section 30, and the decomposition and reaction section 40, includes an inner lining with material that does not react with this type of products and that can operate for long duration at the temperature of the various sections. In some implementations, the inner lining comprises materials such as firebrick, alumina, silica, zirconia, silicon carbide or mixtures of these materials. The inner lining will have an insulation layer between the inner liner and the reactor shell. The reactor shell can be cooled to assure long operation times, especially at the high temperature zones, but the basis is to minimize any forced cooling and use mostly natural convection cooling at the outside of the reactor. The outer shell of the reactor will usually be metal and can be from any material that suit the process parameters. The design of the diameter and thickness will be determined by the pressure and volume needed for reaction.

The heating in the medium temperature heating section 130 is done in a gaseous heating chamber with medium temperature thermal energy sources from the medium temperature energy supply 150. The medium temperature sources will heat the process feed gas to a temperature below the commercially optimum temperature and will be used as a preheater for the process feed gas before it is introduced to the superheating section 140. This section will typically heat the process feed gas to temperatures below 1,000 °C. The process feed gas that can be used for medium temperature heating can be fresh CO₂ feed gas from the process gas feeder and distribution section 90, or recycled product gas from the gas treatment section 110. In some cases, a non-reactive gas such as nitrogen, helium or argon can also be introduced for process optimization. Typical energy sources from the medium temperature energy supply 150 can include energy from nuclear reactors, waste energy and solar energy. The heat transfer will typically be with a heating gas to process gas heat exchanger.

The gases from the medium temperature heating section 130 are fed into the superheating section 140 where the temperature is increased to temperatures high enough to give a good heat transfer into the MPB and for the reactions to take place in a commercial economic method. The typical temperatures of the gas exiting the superheating section 140 into the high temperature section 30 of the main reactor 10 is usually above 2,000 °C and up to 6,000 °C.

In some implementations, the superheating in the superheating section 140 is done in a gaseous heating chamber using an electrical system such as a plasma system that can be a non-transfer or transfer type plasma using low CO₂ footprint electricity, such as nuclear, hydrogen, wind, solar, hydro or biomass-based electricity to superheat the heated gases from the medium temperature heating section 130. CO₂ can easily be heated to very high temperatures and this give a driving force to optimize heat and temperature to the cooler bed particles and gases. This superheated temperature gas is then introduced into the high temperature section 30 of the main reactor 10 for the heating of the carbon particles to the treatment temperature that can be from 400 °C to 2,000 °C. The contact time of the hydrocarbon introduced and the kinetics in the reactor will determine the temperatures and design of the MPB height, diameters and internal mixing systems if any.

The gaseous CO containing product exiting at the gas exit section 100 can be at temperatures of about 100 °C to 1,500 °C and be cooled and treated in the gas treatment section 110 to prepare it for uses such as sales in the gas preparation section 120, or it can be directly used in downstream processes. The gas in the gas exit section 100 can contain small carbon particles that is entrained in the gas and it can include removal of all particulates in the gas treatment section 110. This will be sent to the solid carbonaceous product line in the product handling and storage section 70 for sales or waste handling. Further treatment will include the cleaning of the gas from other impurities if needed, and it can be recycled back to the medium temperature energy supply 150 or the process gas feeder and distribution section 90 or for heat recovery to the particle treatment section 60, the particle removal device 50, the gas exit section 100, or the gas treatment section 110. The cleaned CO will be prepared as a product and can include compression, or any other means to sell the CO in the gas treatment section 110 and the gas preparation section 120. If the downstream process needs high temperature CO gas, the particle preheating section 20 of the main reactor 10, the gas exit section 100, the gas treatment section 110, and the gas preparation section 120 may be designed to accommodate it.

The solid material that exits the reactor at the particle removal device 50 will be smaller in diameter because it is consumed in the main reactor 10 and it can also contain more ash. It will also contain much less volatiles as the fresh solid feed product. The design of the decomposition and reaction section 40 of the main reactor 10 and the particle removal device 50 will allow for the smaller and higher ash content material. The solid product in the particle removal device 50 can still be at a higher temperature of typically 100 °C to 1,000 °C and needs to be treated in the particle treatment section 60 in such a manner to minimize any reaction or combustion. Typically, it will be treated in a non-oxidative atmosphere, or it can be treated with the CO₂ reaction gas, or the CO product gas, as part of preheating of the feed gas stream and the cooling of the particles to a safe handling temperature of typically below 100 °C. This can be used as a heat exchanger to preheat the gases that is used in the reactor or for other energy uses. In the particle treatment section 60 the particles will be classified and treated to select a section that will be recycled or send to the product in the product hopper and feeder section 80 or product or waste stream in the product handling and storage section 70.

The carbon product exiting from the particle treatment section 60 and the gas treatment section 110 is sent to the solid carbon product handling and storage section 70 where it will be classified, sorted and packed for uses such as sales or waste.

Advantages of Illustrative Example 3 include at least the following:
Waste CO₂ can be recycled and converted with waste carbon or bio-based carbon to give a low CO₂ footprint CO.

The mass of carbon used in this reaction is close to the theoretical value and about four times less than the CO₂ feed.

The carbon is used as heat transfer agent, and this optimizes the energy use needed for the reaction

The CO can be purified to an extent that suit the application. Typical applications for the CO can be the production of bio-alcohols using microbial fermentation, liquid fuel and chemicals production using other reactions including catalytic conversion or reduction of materials to produce metals.

The introduction of hydrogen containing materials such as water, hydrocarbons or volatiles in the CO₂ or carbon feed materials can give hydrogen in the CO off gas and this can be beneficial for certain applications.

The reactor mostly contains the reaction chemicals, and this minimize purification of the products.

The carbon bed will give a relative long contact time at a chosen temperature for the gaseous reaction to take place for the conversion of CO₂ to CO. Typical reaction times for this type of gaseous reaction is smaller than a few seconds for high decomposition rates and this reactor can be designed to have contact times for the gas of typical 0.01 to above 10 seconds at temperatures up to 1,500 °C.

The typical time spent by the solid carbon material inside the reactor can be minutes to hours and depend on the reactor size and feed rate. The conversion of the carbon containing material will depend on the time spend in the reactor and the amount of recycling of the solid product. Typical waste solid materials will contain hydrocarbons and other contaminants that will react over a longer time period and this can be optimized by recycling the solids back to the product hopper and feeder section 80.

The heating of the process gas with low CO₂ thermal energy sources from the medium temperature energy supply 150 will increase the efficiency of the process and will reduce the CO₂ footprint of the process. The other heat sources in the medium temperature energy supply 150 can be from waste heat, heat from solar systems or nuclear heat from advanced reactors such a HTGR. Usually, the thermal energy from a nuclear facility is a factor 2.5 to 3 times more efficient than the electrical energy and has a 2.5 to 3 times lower CO₂ footprint.

The superheating of gasses will assure good heat transfer in the high temperature section 30 of the main reactor 10. It will also assist to optimize the heat transfer and correct gas and particle flow inside the reactor. It is the main method to introduce the energy into the reactor and the reactor does not need an internal energy transfer or heating system.

The superheating is done electrically. The waste CO₂ feed can be at a high temperature and this will increase the efficiency of the process. This can be done with low CO₂ footprint electricity and with surplus electricity or when the price of electricity is low. Energy from the exit product streams including gases from the gas treatment section 110 as well as solid from the particle treatment section 60 product streams, can be recovered as electricity and used for superheating. This recovery can also be done with the CO₂ feed stream as medium temperature heating before introduction into the superheater. The electric heating can be used as load following and can have a very high turndown ratio typically from 0% to 100%. Electrical heating gives a high level of control on the energy input and can be used to control the energy input and the temperature of the reactor. Various technologies for electrical heating can be used such as direct resistance heating (direct current of alternative current), indirect resistance heating (direct current of alternative current), radiofrequency and microwave frequency heat transfer.

The high temperature main reactor 10 can be used as an energy store and this can detach the heating cycle from the CO production cycle and can give a continuous supply of CO without using electrical energy from an additional source or when the electricity supply is intermittent. It can also give flexibility to the system and can be used to supply hydrogen when it is needed.

The gaseous product stream, will contain a small amount of entrained carbon (typically < 5% of the total carbon).

The main reactor 10 can be flexible to be optimized for a specific CO₂ and carbon feed material to supply a specific quality CO at a desired pressure or temperature to the application.

The typical theoretical energy consumption of the CO₂ reaction with carbon is about 1.6 MWh per ton CO₂. With the recovery of energy from the main reaction 10 and the particle preheating section 20, the total energy consumptions in some implementations may be below 1 MWh per ton CO₂ feed.

### Example 4: CO₂ conversion to CO by medium temperature heating and superheating carbon particles

Conversion of CO₂ to CO by reacting CO₂ gas with solid carbon containing particles in the packed moving bed. In this case the carbon particles will take part in the reaction. The carbon particles are not catalytic. The medium temperature heating and superheating are done with the carbon particles.

The CO₂ used in this process can be from waste gas and will be purified to a level that will minimize side reactions or unwanted products.

The carbon containing particles can be from different sources including coke, carbon, graphite and bio-based carbon or carbon from waste such as tires. It will typically be from waste material to optimize the CO₂ footprint of this reaction. The carbon containing particles will typically contain a certain amounts of hydrocarbon volatiles to give a CO gas with some hydrogen. Hydrogen containing volatile carbonaceous matter will decompose at these temperatures to give hydrogen in the off gas. In most of the applications this can be a benefit. The carbon will be consumed in the reaction and the design will incorporate the feed of enough fresh carbon material to sustain the reaction. The particles will become smaller as it moves through the particle preheating section 20, the high temperature section 30, and the decomposition and reaction section 40 of the main reaction 10 and the product leaving the main reactor 10 at the particle removal device 50 will contain a larger amount of small particles and ash and this will be removed in the particle treatment section 60 before the particle is sent back to the product hopper and feeder section 80 for recycling. If pure CO is needed as a product the CO₂ and carbon containing feed materials can be purified before feeding or the CO gas will be cleaned afterwards in the gas treatment section 110.

CO will typically be used in processes that needs it for reduction purposes, such as reduction of metals, typically in iron reduction using rotary kilns, rotary hearth furnaces or shaft furnaces or it can be used as part of syngas (CO/H₂ mixture) to produce chemicals, fuels or for reduction purposes. In most of these applications, hydrogen will be beneficial.

The main reactor 10 is designed to integrate with the use of the CO gas and when high temperature CO is needed for reduction or use, such as in DRI, the particle preheating section 20 of the main reactor 10 will be minimized and the product will be sent as a hot product to the application. In this case the MPB will mostly be used as a reactor and most of the energy recovery will be in the decomposition and reaction section 40. If cooler CO is needed, the particle preheating section 20 of the main reactor 10 will be designed to recover energy.

Recycled screened or fresh carbon particles with the desired particle size distribution, typically 1 mm to 100 mm in diameter or with a particle size distribution that will optimize the pressure drop across the reactor, distribution and flow of solids and flow of gases through the packed bed, is introduced at the top of the reactor via the product hopper and feeder section 80. The particles can also be introduced in different sections of the main reactor 10 to optimize possible devolatilizing effects or heat exchanging.

The main stream of the CO₂ is introduced at the bottom of the reactor at a pressure and temperature and at parameters that suit the pressure used inside the reactor via the process gas feeder and distribution section 90. These temperatures will be typically below 600 °C and the pressure below 15 Bar (gauge), typically below 5 Bar (gauge). To optimize the energy efficiency, the gases can be preheated. The CO₂ gas can be treated before in enters the reactor to remove unwanted species from the gas including Nitrogen and Sulphur containing materials such as H₂S, SOₓ, mercaptans, etc. Contaminants such as O₂, CO₂, water and hydrocarbons can be removed or it can be beneficial, and it will depend on the application of the product gas. This pretreatment will minimize the contamination of the solid and gaseous streams.

The main reactor 10, comprising the particle preheating section 20, the high temperature section 30, and the decomposition and reaction section 40, include an inner lining with material that does not react with this type of products and that can operate for long duration at the temperature of the various sections and will typically be made up of materials such as firebrick, alumina, silica, zirconia, silicon carbide or mixtures of these materials. The inner lining will have an insulation layer between the inner liner and the reactor shell. The reactor shell can be cooled to assure long operation times, especially at the high temperature zones, but the basis is to minimize any forced cooling and use mostly natural convection cooling at the outside of the reactor. The outer shell of the reactor will usually be metal and can be from any material that suit the process parameters. The design of the diameter and thickness will be determined by the pressure and volume needed for reaction.

The heating in the medium temperature heating section 130 is done in a heating chamber with medium temperature thermal energy sources from the medium temperature energy supply 150. The medium temperature sources will heat particles from the product hopper and feeder section 80 to a temperature below the commercially optimum temperature and will be used as a preheater for the particles before it is introduced to the superheating section 140. Gases from the process gas feeder and distribution section 90 recycled product gas from the gas treatment section 110 or non-reactive gas such as nitrogen, helium or argon can also be introduced for process optimization in the medium temperature heating section 130, but the main heat transfer will be with the particles. The carbon particles are not sensitive for the temperature up to the decomposition temperature of about 3,600 °C and this medium temperature heating section can be to any temperature below 3,600 °C, but typically below 1,000 °C. Typical energy sources from the medium temperature energy supply 150 can include energy from nuclear reactors, waste energy and solar energy. This will typically be done with a gas to solids heat exchangers. This heat exchanger can be of a design that store energy in the particles, and it can be used as system to store energy and control energy supply to the superheating section 140 and the main reactor 10.

The particles from the medium temperature heating section are fed into the superheating section 140 where the temperature is increased to temperatures high enough to give a good heat transfer into the MPB and for the reactions to take place in a commercial economic method. The superheating in the superheating section 140 is done by heating carbon particles from the medium temperature heating section 130 using energy from the high temperature energy supply 160 and this can include electric heating using low CO₂ emission electricity sources, direct solar heating or heat transfer from high temperature gases including from low CO₂ footprint nuclear, solar, gases from biomass combustion or waste gases. This superheating is usually to temperatures below the decomposition temperature of carbon of about 3,600 °C and typically to temperatures of about 2,500 °C. The high temperatures are needed to give a driving force to do a heat and temperature transfer to the cooler particles and gas in the bed in the high temperature section 30 of the main reactor 10. The electric heating can include heating with plasma systems, high frequency induction with radio or microwaves and resistance heating. A small amount of recycled product gas from the gas treatment section 110, feed gas from the process gas feeder and distribution section 90 or inert gases can be used in this section to optimize heat transfer and to assure non-reactivity or combustion. This high temperature particles are then introduced into the high temperature section 30 of the main reactor 10 for the heating of the main bed of carbon particles to the treatment temperature that can be from 400 °C to 2,000 °C. The contact time of the hydrocarbon introduced and the kinetics in the reactor will determine the temperatures and final design of the MPB height and diameters.

The gaseous CO containing product exiting at the gas exit section 100 can be at temperatures of about 100 °C to 1,500 °C and be cooled and treated in the gas treatment section 110 to prepare it for uses such as sales in the pas preparation section 120, or it can be directly used in downstream processes. The gas in the gas exit section 100 can contain small carbon particles that is entrained in the gas and it can include removal of all particulates in the gas treatment section 110. This will be sent to the solid carbonaceous product line in the solid product handling and storage section 70 for sales or waste handling. Further treatment will include the cleaning of the gas from other impurities if needed, and it can be recycled back to the medium temperature supply 150 or the process gas feeder and distribution section 90 or for heat recovery to the particle treatment section 60, the particle removal device 50, the gas exit section 100, or the gas treatment section 110. The cleaned CO will be prepared as a product and can include compression, or any other means to sell the CO in the gas treatment section 110 and the gas preparation section 120. If the downstream process needs high temperature CO gas, the particle preheating section 20 of the main reactor 10, the gas exit section 100, the gas treatment section 110, and the gas preparation section 120 will be design to accommodate it.

The solid material that exits the reactor at the particle removal device 50 will be smaller in diameter because it is consumed in the reactor, and it can also contain more ash. It will also contain much less volatiles as the fresh solid feed product. The design of the decomposition and reaction section 40 of the main reactor 10 and the particle removal device 50 will allow for the smaller and higher ash content material. The solid product in the particle removal device 50 can still be at a higher temperature of typically 100 °C to 1,000 °C and needs to be treated in the particle treatment section 60 in such a manner to minimize any reaction or combustion. Typically, it will be treated in a non-oxidative atmosphere, or it can be treated with the CO₂ reaction gas, or the CO product gas, as part of preheating of the feed gas stream and the cooling of the particles to a safe handling temperature of typically below 100 °C. This can be used as a heat exchanger to preheat the gases that is used in the reactor or for other energy uses. In the particle treatment section 60, the particles will be classified and treated to select a section that will be recycled or send to the product in the product hopper and feeder section 80 or product or waste stream in the product handling and storage section 70.

The carbon product exiting from the particle treatment section 60 and the gas treatment section 110 is sent to the solid carbon product handling and storage section 70 where it will be classified, sorted and packed for sales or waste.

Advantages of Illustrative Example 4 include at least the following:
Direct air captured CO₂, byproduct CO₂ or waste CO₂ can be recycled and converted with waste carbon or bio-based carbon to give a low CO₂ footprint CO.

The mass of carbon used in this reaction is close to the theoretical value and about 4 times less than the CO₂ feed.

The carbon is used as heat transfer agent, and this optimize the energy use needed for the reaction

The CO can be purified to an extent that suit the application. Typical applications for the CO can be the production of bio-alcohols using microbial fermentation, liquid fuel and chemicals production using other reactions including catalytic conversion or reduction of materials to produce metals.

The introduction of hydrogen containing materials such as water, hydrocarbons or volatiles in the CO₂ or carbon feed materials can give hydrogen in the CO off gas and this can be beneficial for certain applications.

The reactor mostly contains the reaction chemicals, and this minimize purification of the products.

The carbon bed will give a relative long contact time at a chosen temperature for the gaseous reaction to take place for the conversion of CO₂ to CO. Typical gaseous reaction times for this type of reaction is smaller than a few seconds for high decomposition rates and this reactor can be designed to have contact times for the gas of typical 0.01 to above 10 seconds at temperatures up to 1,500 °C.

The typical time spent by the solid carbon material inside the reactor can be minutes to hours and depend on the reactor size and feed rate. The conversion of the carbon containing material will depend on the time spend in the reactor and the amount of recycling of the solid product. Typical waste solid materials can contain hydrocarbons and other contaminants that will react over a longer time period, and this can be optimized by recycling the solids back to the product hopper and feeder section 80.

The medium temperature heating of the particles with low CO₂ thermal energy sources will increase the efficiency of the process and will reduce the CO₂ footprint of the process. It can use other heat sources in the medium temperature heating section 130 such as waste heat, heat from solar systems, nuclear heat from normal nuclear reactors or advanced nuclear reactors such a HTGR. Usually, the thermal energy from a nuclear facility is a factor 2.5 to 3 times more efficient and has a 2.5 to 3 times lower CO₂ footprint. The heating of the particles with heat from a HTGR will give a more complex heat exchanger, but it can use the primary high temperature thermal energy from a HTGR and this is more efficient than using the electrical energy from a nuclear reactor.

The medium temperature heating heat exchanger filled with particles, can be used as an energy storage device and can also be used to control the process parameters such as energy, temperature and mass flow.

The superheating of carbon solids from the medium temperature heating section 130 in the superheating section 140 will assure good heat transfer in the high temperature section 30 of the main reactor 10. It will also assist to optimize the heat transfer and correct gas and particle flow inside the reactor. It is the main method to introduce the energy into the reactor and the reactor does not need an internal energy transfer or heating system.

The superheating section 140 of the solids can be done with electrical heating. Electrical heating can be done with low CO₂ footprint electricity and with surplus electricity or when the price of electricity is low. Energy from the exit product streams including gaseous from the gas treatment section 110 as well as solid particle treatment section 60 product streams, can be recovered as electricity and used for superheating. The electric heating can be used as load following and can have a very high turndown ratio typically from 0% to 100%. Electrical heating gives a high level of control on the energy input and can be used to control the energy input and the temperature of the reactor. Various technologies for electrical heating can be used such as direct resistance heating (direct current of alternative current), indirect resistance heating (direct current of alternative current), plasma-arc heating or radiofrequency and microwave frequency heat transfer.

The use of a medium temperature heating and superheating section can use a combination of other heat sources and electrical heating to optimize the energy transfer, reactor design, energy efficiency and reduction of CO₂ footprint.

The high temperature main reactor 10 can be used as an energy store and this can detach the heating cycle from the CO production cycle and can give a continuous supply of CO without using electrical energy from an additional source or when the electricity supply is intermittent. It can also give flexibility to the system and can be used to supply hydrogen when it is needed.

The gaseous product stream will contain a small amount of entrained carbon (typically < 5% of the total carbon).

The main reactor 10 can be flexible to be optimized for a specific CO₂ and carbon feed material to supply a specific quality CO at a desired pressure or temperature to the application.

The typical theoretical energy consumption of the CO₂ reaction with carbon is about 1.6 MWh per ton CO₂. With the recovery of energy from the main reactor 10 and the particle preheating section 20, the total energy consumptions is some implementations may be below 1 MWh per ton CO₂ feed.

### Example 5: Hydrogen production by medium temperature heating, superheating and decomposing of hydrocarbon gases and the use of catalytic particles in the MPB

This illustrative example is in principle the same as Example 1, but catalytic particles are used in the place of carbon particles.

Pyrolysis of hydrocarbons in a MPB of catalytic particles that can contain carbon, metals, oxides or carbides to produce a gaseous hydrogen product and coated solid catalytic particles. The medium temperature heating and superheating are done with a gas. The catalytic particles can reduce the temperature of the process and can reduce the energy use. The carbon will be deposited on the catalytic particles and in the particle treatment section 60, the deposited layers will be removed, and the catalytic particles cleaned ready for re-use and recycled to the product hopper and feeder section 80. The carbonaceous product removed from the catalytic particles will be prepared for uses such as sales in the product handling and storage section 70 and send to sales in the product hopper and feeder section 80.

The carbonaceous product is deposited on the catalytic particles and can be of different forms and can include carbon, graphite, or any other carbonaceous material including nano carbon materials such as fibers, tubes or spherical shapes.

The catalytic particles can contaminate the deposited carbon and care must be taken during the removal of the carbon product from the catalytic particles to assure clean carbon and clean catalyst.

Advantages of Illustrative Example 5 include at least the following:
The temperature of the reaction is lower than a non-catalytic particle bed and the maximum temperature in the particle preheating section 20, the high temperature section 30, and the decomposition and reaction section 40 of the main reactor 10 will be lower than without a catalytic particle bed.

The catalytic particle bed will give a relative long contact time at a chosen temperature for the gaseous reaction to take place. Typical gaseous reaction times for this type of reaction is smaller than a few seconds for high decomposition rates and this reactor can be designed to have contacts times for the gas of typical 0.01 to above 10 seconds at temperatures from a few hundred °C up to 1,500 °C.

The medium temperature heating of the gasses with low CO₂ thermal energy sources will increase the efficiency of the process and will reduce the CO₂ footprint of the process. Usually, the thermal energy from a nuclear facility is a factor 2.5 to 3 times more efficient and has a 2.5 to 3 times lower CO₂ footprint.

The superheating of gasses will assure good heat transfer in the high temperature section 30 of the main reactor 10. It will also assist to optimize the heat transfer and correct gas and particle flow inside the reactor. It is the main method to introduce the energy into the reactor and the reactor does not need an internal energy transfer or heating system.

The superheating is done electrically, and this can be done with low CO₂ footprint electricity and with surplus electricity or when the price of electricity is low. Energy from the exit product streams including gaseous from the gas treatment section 110 as well as solid from the particle treatment section 60 product streams, can be recovered as electricity and used for superheating. The electric heating can be used as load following and can have a very high turndown ratio typically from 0% to 100%. Electrical heating gives a high level of control on the energy input and can be used to control the energy input and the temperature of the reactor. Various technologies for electrical heating can be used such as direct resistance heating (direct current of alternative current), indirect resistance heating (direct current of alternative current), radiofrequency and microwave frequency heat transfer.

The high temperature reactor can be used as an energy store and this can detach the heating cycle from the hydrogen production cycle and can give a continuous supply of Hydrogen without using electrical energy from an additional source or when the electricity supply is intermittent. It can also give flexibility to the system and can be used to supply hydrogen when it is needed.

The carbon product will mostly be of a solid form with a minimum of fines. This makes handling of the carbon and storage easier than handling of carbon fines.

The gaseous product stream, will contain a small amount of entrained carbon (typically < 20% of the total carbon), because most of the carbon is deposited on the solid carbon materials and will be part of the carbon exiting the reactor at the bottom at the particle removal device 50. This minimizes the cleaning and filter systems required to clean the gas in the gas treatment section 110.

The typical energy consumption of normal hydrocarbon pyrolysis processes is between 10 and 30 MWh electric or 25 to 75 MWh thermal per ton hydrogen produced. With the recovery of energy from the main reactor 10 and the particle preheating section 20, the heating in the medium temperature heating section 130 and the catalytic effects of lowering the temperature of the reaction, the total energy consumption is expected to be below 5 MWh electric or 12.5 MWh thermal per ton hydrogen produced.

### Example 6: Hydrogen production by medium temperature heating and superheating catalytic particles and decomposing hydrocarbon gases in a MPB

This section is in principle the same as Example 2, but catalytic particles are used in the place of carbon particles.

Pyrolysis of hydrocarbons in a MPB of catalytic particles that can contain carbon, metals, oxides or carbides to produce a gaseous hydrogen product and coated solid catalytic particles. The superheating is done with catalytic particles that is superheated. The catalytic particles can reduce the temperature of the process and can reduce the energy use. The carbon will be deposited on the catalytic particles and in the particle treatment section 60 the deposited layers will be removed and the catalytic particles recycled to the product hopper and feeder section 80. The carbonaceous product removed from the catalytic particles will be prepared for sales in the product handling and storage section 70 and sent to the product hopper and feeder section 80.

The carbonaceous product is deposited on the catalytic particles can be of different forms and can include carbon, graphite, or any other carbonaceous material including nano carbon materials such as fibers, tubes or spherical shapes.

The catalytic particles can contaminate the deposited carbon and care must be taken during the removal of the carbon product from the catalytic particles to assure clean carbon and clean catalyst.

Advantages of Illustrative Example 6 include at least the following:
The temperature of the reaction is lower than a non-catalytic particle bed and the maximum temperature in the particle preheating section 20, the high temperature section 30, and the decomposition and reaction section 40 of the main reactor 10 will be lower than without a catalytic particle bed.

It can be easier to preheat the catalytic particles than normal carbon particles in the medium temperature heating section. The medium temperature heating section can be used to clean the catalytic particles of unwanted carbon.

The catalytic particle bed will give a relative long contact time at a chosen temperature for the reaction to take place. Typical reaction times for this type of reaction is smaller than a few seconds for high decomposition rates and this reactor can be designed to have contacts times for the gas of typical 0.01 to above 10 seconds at temperature from a few hundred °C up to 1,500 °C.

The medium temperature heating of the particles with low CO₂ thermal energy sources will increase the efficiency of the process and will reduce the CO₂ footprint of the process. It can use other heat sources in the medium temperature heating section 130 such as waste heat, heat from solar systems, nuclear heat from normal nuclear reactors or advanced nuclear reactors such a HTGR. Usually, the thermal energy from a nuclear facility is a factor 2.5 to 3 times more efficient and has a 2.5 to 3 times lower CO₂ footprint. The heating of the particles with heat from a HTGR will give a more complex heat exchanger, but it can use the primary high temperature thermal energy from a HTGR and this is more efficient than using the electrical energy from a nuclear reactor.

The medium temperature heating heat exchanger filled with particles, can be used as an energy storage device and can also be used to control the process parameters such as energy, temperature and mass flow.

The superheating of catalytic particles from the medium temperature heating section 130 in the superheating section 140 will assure good heat transfer in the high temperature section 30 of the main reactor 10. It will also assist to optimize the heat transfer and correct gas and particle flow inside the reactor. It is the main method to introduce the energy into the reactor and the reactor does not need an internal energy transfer or heating system.

The superheating section 140 of the catalytic particles can be done with electrical heating. Electrical heating can be done with low CO₂ footprint electricity and with surplus electricity or when the price of electricity is low. Energy from the exit product streams including gaseous from the gas treatment section 110 as well as solid particle treatment section 60 product streams, can be recovered as electricity and used for superheating. The electric heating can be used as load following and can have a very high turndown ratio typically from 0% to 100%. Electrical heating gives a high level of control on the energy input and can be used to control the energy input and the temperature of the reactor. Various technologies for electrical heating can be used such as direct resistance heating (direct current of alternative current), indirect resistance heating (direct current of alternative current), plasma-arc heating or radiofrequency and microwave frequency heat transfer.

The high temperature main reactor 10 can be used as an energy store, and this can detach the heating cycle from the hydrogen production cycle and can give a continuous supply of Hydrogen without using electrical energy from an additional source. It can also give flexibility to the system and can be used to supply hydrogen when it is needed.

The gaseous product stream will contain a small amount of entrained carbon (typically < 20% of the total carbon), because most of the carbon is deposited on the solid carbon materials and will be part of the carbon exiting the reactor at the bottom at the particle removal device 50. This minimizes the cleaning and filter systems required to clean the gas in the gas treatment section 110.

The typical energy consumption of normal hydrocarbon pyrolysis processes is between 10 and 30 MWh electric or 25 to 75 MWh thermal per ton hydrogen produced. With the recovery of energy from the main reactor 10 and the particle preheating section 20, plus the partial use of carbon medium temperature heating and the catalytic effects of lowering the temperature of the reaction, the total energy consumptions is expected to be below 5 MWh electric or 12.5 MWh thermal per ton hydrogen produced.

### Example 7: Tetrafluoroethylene (TFE) production by medium temperature heating and superheating and reaction of fluoride containing gases and use of carbon particles in MPB

The reaction of fluoride containing gases with carbon in a MPB of carbon particles to produce gaseous carbon fluoride products of higher value such as tetrafluoroethylene (TFE or C₂F₄) by extracting and quick cooling (quenching) the gas from high temperatures. The medium temperature heating and superheating are done with a gas. The extraction is done at a suitable temperature from the particle preheating section 20, the high temperature section 30, and the decomposition and reaction section 40 of the main reactor 10 and the quenching is done in section in the gas exit section 100.

The fluoride containing feed gases can be a carbon fluoride or from waste such as carbon fluorides from the aluminum industry, typically carbon tetrafluoride or carbon hexafluoride, or can be fluoride containing materials such as silicon fluorides or fluorine and will be fed from the process gas feeder and distribution section 90 or partially into the medium temperature heating section 130 or the rest of the main reactor 10 as determined for optimum design.

The main reactor 10 can be at different pressures from 0.1 Bar (absolute) to 10 Bar(a) to optimize the reaction and minimize the temperature of reaction.

The temperature inside the reactor can be up to 3,000 °C.

The decomposition and reaction section 40 of the main reactor 10 is used as the main heat exchanger to increase the temperatures of the fluorine feed gases, thereby decreasing energy usage.

The carbon will be in excess, and this drives the chemical process to the desired products. The long contact times of the gases inside the reactor will assist with thermodynamics and kinetics to produce the correct species in the product gas.

The carbon particles will react with the fluorides and with time it will reduce in size and fresh particles will need to be loaded from the product hopper and feeder section 80.

The energy use of the process will decrease because of the energy recovery in the decomposition and reaction section 40 of the main reactor 10. The heating of the feed gas in the medium temperature heating section 130 using waste energy or efficient energy, such as from a HTGR to temperatures above 700 °C, will reduce the energy use further.

### Example 8: Tetrafluoroethylene production by medium temperature heating and superheating of carbon particles and reaction of fluoride containing gases

The reaction of fluoride containing gases with carbon in a MPB of carbon particles to produce gaseous carbon fluoride products of higher value such as TFE (C₂F₄) by extracting and quick cooling (quenching) the gas from high temperatures. The medium temperature heating and superheating are done with carbon particles that is superheated. The extraction is done at a suitable temperature from the particle preheating section 20, the high temperature section 30, and the decomposition and reaction section 40 of the main reactor 10 and the quenching is done in the gas exit section 100.

The reactor 1 can be at different pressures from 0.1 Bar (absolute) to 10 Bar(a) to optimize the reaction and minimize the temperature of reaction.

The temperature inside the reactor can be up to 2500 °C.

The decomposition and reaction section 40 of the main reactor 10 will be used as the main heat exchanger to increase the temperatures of the fluorine feed gases, which will decrease the energy usage.

The carbon will be in excess, and this drives the chemical process to the desired products. The long contact times of the gases inside the reactor will assist with thermodynamics and kinetics to produce the correct species in the product gas.

The carbon particles will react with the fluorides and with time it will reduce in size and fresh particles will need to be loaded from the product hopper and feeder section 80.

The energy use of the process will decrease because of the energy recovery in the decomposition and reaction section 40 of the main reactor 10. The heating of the feed gas in the medium temperature heating section 130 using waste energy or efficient energy, such as from a HTGR to temperatures above 700 °C, it will reduce the energy use further.

The foregoing disclosure has been set forth to illustrate the invention and is not intended to be limiting. Since modifications of the disclosed form and implementations incorporating the spirit and substance of the invention may occur to persons skilled in the art, the invention should be construed to include everything within the scope of the appended claims and equivalents thereof.

## Claims

1. A system comprising:
a reactor comprising:
a moving packed bed of particles flowing downward through the reactor from a top of the reactor to a bottom of the reactor;
a feed gas interacting with the moving packed bed of particles and flowing upward through the reactor in an opposite direction to a direction of movement of the moving packed bed of particles;
a particle preheating section configured to preheat particles of the moving packed bed of particles;
a high temperature section configured to receive the particles of the moving packed bed of particles that have been preheated in the particle preheating section and to transfer energy to the received particles to raise the temperature of the received particles to at least one of a decomposition temperature or a reaction temperature; and
a decomposition and reaction section configured to receive the particles of the moving packed bed of particles whose temperature has been raised to the at least one of the decomposition temperature or the reaction temperature, to receive the feed gas interacting with the moving packed bed of particles, and to provide heat transfer between the particles of the moving packed bed of particles and the feed gas such that a reaction occurs that generates a gaseous product and a solid product;
a medium temperature heating section configured to heat at least one of gases or particles to a first defined temperature with heat from a medium temperature heat source; and:
a superheating section configured to heat the at least one of gases or particles received from the medium temperature heating section to a second defined temperature with an electrical system and to provide the at least one of gases or particles heated to the second defined temperature to the high temperature section of the reactor;
wherein the high temperature section of the reactor utilizes the at least one of gases or particles received from the superheating gaseous chamber to transfer energy to the received particles of the moving packed bed of particles to raise the temperature of the received particles of the moving packed bed of particles to the at least one of the decomposition temperature or the reaction temperature.

2. The system of claim 1, further comprising:
a particles treatment section configured to receive particles of the moving packed bed of particles exiting the reactor at a bottom of the reactor and to remove material deposited on an exterior of the particles of the moving packed bed of particles during the reaction within the decomposition and reaction section of the reactor.

3. The system of claim 1, further comprising:
a gas treatment section configured to receive gas exiting the reactor and to remove materials from the gas that were a result of the reaction within the decomposition and reaction section of the reactor.

4. The system of claim 1, wherein the particle preheating section, the high temperature section, and the decomposition and reaction section comprise an inner liner comprising material that does not react with the particles of the moving packed bed of particles and the feed gas.

5. The system of claim 1, wherein the particle preheating section comprises a heat exchanger configured to transfer energy from the feed gas to the particles of the moving packed bed of particles.

6. The system of claim **1,** wherein the electrical system of the superheating section is a plasma system.

7. The system of claim **1,** wherein the first defined temperature is a temperature below a commercially optimum temperature or wherein the first defined temperature is between 600 °C and 1,200 °C or wherein the second defined temperature is between 1,200 °C and 6,000 °C.

8. The system of claim 1, wherein the reaction in the decomposition and reaction section of the reactor generates a gaseous hydrogen product and a solid carbon product.

9. A method, comprising:
heating, with a medium temperature heating section, at least one of gas or particles to a first defined temperature;
heating, with an electrical system of a superheating section, the at least one of gas or particles received from the medium temperature heating section to a second defined temperature;
heating, at a high temperature section of a reactor, particles of a moving packed bed of particles flowing through the reactor with the at least one of gas or particles received from the superheating section to raise the temperature of the particles of the moving packed bed of particles to at least one of a decomposition temperature or a reaction temperature;
receiving, at a decomposition and reaction section of the reactor, particles of the moving packed bed of particles whose temperatures has been raised to the at least one of the decomposition temperature or the reaction temperature; and
providing, at the decomposition and reaction section of the reactor, heat transfer between the particles of the moving packed bed of particles and a feed gas such that a reaction occurs that generates a gaseous product and a solid product.

10. The method of claim 9, further comprising:
removing, with a particle treatment section, from particles of the moving packed bed of particles exiting the reactor, material of the solid product deposited on an exterior of particles of the moving packed bed of particles during the reaction within the decomposition and reaction section of the reactor.

11. The method of claim 9, further comprising:
removing, at a gas treatment section, materials from gas exiting the reactor that were generated by the reaction within the decomposition and reaction section of the reactor.

12. The method of claim 9, further comprising:
transferring, with a heat exchanger of a particle preheating section of the reactor, energy from the feed gas to particles of the moving packed bed of particles prior to particles of the moving packed bed of particles flowing into the high temperature section of the reactor.

13. The method of claim 9, wherein the electrical system of the superheating section is a plasma system.

14. The method of claim 9, wherein the first defined temperature is a temperature below a commercially optimum temperature or wherein the first defined temperature is between 600 °C and 1,200 °C or wherein the second defined temperature is between 1,200 °C and 6,000 °C.

15. The method of claim 9, wherein the reaction in the decomposition and reaction section of the reactor generates a gaseous hydrogen product and a solid carbon product.
